# EUROPÄISCHE PATENTSCHRIFT

(11) **EP 4 037 967 B1**
(45) Veröffentlichungstag und Bekanntmachung des Hinweises auf die Patenterteilung: **26.04.2023**
(21) Anmeldenummer: 20788728.2
(22) Anmeldetag: 30.09.2020
(51) Int. Cl.: B64D 11/00, B64D 11/06

(54) **FLUGZEUGSITZMODUL**
AIRCRAFT-SEAT MODULE
MODULE DE SIÈGE D'AÉRONEF

(30) Priorität: 30.09.2019 DE 102019126404; 20.02.2020 DE 102020104480
(43) Veröffentlichungstag der Anmeldung: 10.08.2022
(73) Patentinhaber: Recaro Aircraft Seating GmbH & Co. KG, 74523 Schwäbisch Hall (DE)
(72) Erfinder: IVANOV, Pavel, 74248 Ellhofen (DE); OHM, Andreas, 74635 Kupferzell (DE); MAIER, Felix, 74523 Schwäbisch Hall (DE)
(74) Vertreter: Daub, Thomas
(86) Internationale Anmeldenummer: PCT/EP2020/077356
(87) Internationale Veröffentlichungsnummer: WO 2021/064014

(56) Entgegenhaltungen:
- WO-A1-2018/093825
- WO-A1-2018/184778

## Beschreibung

### Stand der Technik

Die Erfindung betrifft ein Flugzeugsitzmodul nach dem Oberbegriff des Patentanspruchs 1.

Es ist bereits ein Flugzeugsitzmodul mit einer Umhausungseinheit, die einen Fluggastsitzbereich zumindest teilweise begrenzt und mit einer Türeinheit, die zumindest dazu vorgesehen ist, zumindest in einem Betriebszustand einen Durchgangsbereich zu dem Fluggastsitzbereich zu verschließen, und mit einer Lagervorrichtung, die dazu vorgesehen ist, die Türeinheit beweglich zu der Umhausungseinheit zu lagern und dazu ein Lagermodul aufweist, das ein erstes Lagerelement und ein zweites Lagerelement aufweist, die zueinander beweglich gelagert sind, vorgeschlagen worden.

Aus der Druckschrift WO 2018/093825 A1 ist bereits ein Flugzeugsitzmodul mit einer Umhausungseinheit, die einen Fluggastsitzbereich zumindest teilweise begrenzt, und mit einer Türeinheit, die zumindest dazu vorgesehen ist, zumindest in einem Betriebszustand einen Durchgangsbereich zu dem Fluggastsitzbereich zu verschließen, und mit einer Lagervorrichtung, die dazu vorgesehen ist, die Türeinheit beweglich zu der Umhausungseinheit zu lagern und dazu ein Lagermodul aufweist, das ein erstes Lagerelement und ein zweites Lagerelement aufweist, die zueinander beweglich gelagert sind, bekannt.

Aus der Druckschrift WO 2018/184778 A1 ist bereits ein Flugzeugsitzmodul mit einer Umhausungseinheit, die einen Fluggastsitzbereich zumindest teilweise begrenzt, und mit einer Türeinheit, die zumindest dazu vorgesehen ist, zumindest in einem Betriebszustand einen Durchgangsbereich zu dem Fluggastsitzbereich zu verschließen, und mit einer Lagervorrichtung, die dazu vorgesehen ist, die Türeinheit beweglich zu der Umhausungseinheit zu lagern und dazu ein Lagermodul aufweist, das ein erstes Lagerelement und ein zweites Lagerelement aufweist, die zueinander beweglich gelagert sind, bekannt.

Die Aufgabe der Erfindung besteht insbesondere darin, eine gattungsgemäße Vorrichtung mit verbesserten Eigenschaften hinsichtlich einer Sicherheit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Flugzeugsitzmodul mit einer Umhausungseinheit, die einen Fluggastsitzbereich zumindest teilweise begrenzt und mit einer Türeinheit, die zumindest dazu vorgesehen ist, zumindest in einem Betriebszustand einen Durchgangsbereich zu dem Fluggastsitzbereich zu verschließen, und mit einer Lagervorrichtung, die dazu vorgesehen ist, die Türeinheit beweglich zu der Umhausungseinheit zu lagern und dazu ein Lagermodul aufweist, das ein erstes Lagerelement und ein zweites Lagerelement aufweist, die zueinander beweglich gelagert sind.

Es wird vorgeschlagen, dass das Lagermodul ein drittes Lagerelement aufweist, das in einem von einem Normalbetriebszustand unterschiedlichen Betriebszustand dazu vorgesehen ist, das zweite Lagerelement beweglich zu lagern, wobei das dritte Lagerelement_als ein Sekundärlagerelement ausgebildet ist, das in einem von einem vom Normalbetriebszustand unterschiedlichen Betriebszustand für die bewegliche Lagerung der Türeinheit vorgesehen ist. Unter einem "Flugzeugsitzmodul" soll insbesondere ein Modul verstanden werden, das einen Fluggastsitzbereich definiert und dazu wenigstens ein Umhausungselement, das den Fluggastsitzbereich zumindest teilweise von einem restlichen Kabinenbereich abtrennt, zumindest einen in dem Fluggastsitzbereich angeordneten Flugzeugsitz und weitere Elemente des Fluggastsitzbereiches umfasst, wie insbesondere eine Konsole, eine Ottomane und/oder eine Bildschirmeinheit. Der Flugzeugsitz ist dabei vorzugsweise als ein Einzelsitz ausgebildet. Unter einem "Fluggastsitzbereich" soll insbesondere ein Bereich verstanden werden, in dem zumindest ein Flugzeugsitz, vorzugsweise ein als ein Einzelsitz ausgebildeter Flugzeugsitz, oder eine aus zumindest zwei Flugzeugsitzen gebildete Sitzeinheit angeordnet ist und der zum Aufenthalt wenigstens eines Passagiers während eines Fluges in einem Flugzeug vorgesehen ist. In einem Sitzbereich sind vorzugsweise weitere Elemente angeordnet, die von einem Passagier nutzbar sind, wie insbesondere eine Konsole, eine Ottomane, Verstaumöglichkeiten, Ablageelemente und/oder Entertainmentvorrichtungen. Der Fluggastsitzbereich ist insbesondere als ein Teilbereich einer Kabine, insbesondere einer Flugzeugkabine, ausgebildet. Ein Fluggastsitzbereich grenzt vorzugsweise an zumindest einen Gangbereich der Kabine an. Unter einem "angrenzenden Kabinenbereich" soll insbesondere ein unmittelbar an den Fluggastsitzbereich angrenzender Bereich der Kabine, wie insbesondere ein Gangbereich, verstanden werden, über den der Fluggastsitzbereich von einem Passagier erreicht werden kann.

Unter einer "Türeinheit" soll insbesondere eine Baugruppe verstanden werden, die dazu vorgesehen ist, den zumindest einen Fluggastsitzbereich in zumindest einem Betriebszustand zumindest teilweise von dem Rest der Kabine, insbesondere von zumindest einem Gangbereich der Kabine, abzutrennen. Vorzugsweise trennt die Türeinheit den zumindest einen Fluggastsitzbereich in zumindest einem Betriebszustand zumindest teilweise physisch, insbesondere so, dass ein Durchgang versperrt ist, und zumindest teilweise optisch, insbesondere zumindest teilweise blickdicht und vorzugsweise komplett blickdicht, von dem Rest der Kabine, insbesondere bis zu einer Höhe des wenigstens einen Umhausungselements, ab. Die Türeinheit ist zumindest zwischen einer geöffneten Stellung und einer geschlossenen Stellung verstellbar. Vorzugsweise kann die Türeinheit zusätzlich in zumindest einer Zwischenstellung zwischen dem geöffneten Zustand und dem geschlossenen Zustand gehalten werden. Die Türeinheit ist dabei vorzugsweise aus einem festen Material, wie insbesondere einem Kunststoff, beispielsweise einem faserverstärkten Kunststoff, gebildet, einem Verbundmaterial (Composit-Platte), wie beispielsweise einem Sandwichmaterial mit einem Wabenkern, einem Metall, wie insbesondere einem Aluminium, oder von einem Rahmen, beispielsweise einem Aluminiumrahmen mit einer Bespannung aus einem Textil oder Leder, gebildet. Unter einem "Durchgangsbereich" soll insbesondere ein Bereich verstanden werden, der zwischen dem Fluggastsitzbereich und dem Gangbereich der Kabine angeordnet ist, und durch den die beiden Bereiche miteinander verbunden sind. Durch den Durchgangsbereich kann sich eine Person, insbesondere ein Passagier zwischen dem Fluggastsitzbereich und dem Gangbereich der Kabine bewegen.

Unter einer "Lagervorrichtung" soll insbesondere eine Vorrichtung verstanden werden, die dazu vorgesehen ist, ein Bauteil, wie vorzugsweise die Türeinheit zwischen zumindest zwei Stellungen beweglich zu lagern. Die Lagervorrichtung ist vorzugsweise insbesondere dazu vorgesehen, die Türeinheit zwischen einer maximal geschlossenen Stellung und einer maximal geöffneten Stellung beweglich zu lagern. Vorzugsweise ist die Lagervorrichtung dazu vorgesehen, die Türeinheit entlang einer Bewegungsbahn beweglich zu lagern, wobei die Bewegungsbahn vorzugsweise von einer geraden Bewegungsachse gebildet ist. Unter einem "Lagermodul" soll insbesondere ein Teil der Lagervorrichtung verstanden werden, das ein zu lagerndes Element zumindest in einem Teilbereich beweglich lagert. Die Lagervorrichtung kann ein Lagermodul oder vorzugsweise auch zwei oder mehr Lagermodule aufweisen. Mehrere Lagermodule sind vorzugsweise in unterschiedlichen Bereichen des zu lagernden Elements, wie insbesondere der Türeinheit angeordnet, beispielsweise in einem oberen Bereich und in einem unteren Bereich, um insbesondere eine gleichmäßige Lagerung zu garantieren. Zwei Lagermodule einer Lagervorrichtung können gleich ausgebildet sein, grundsätzlich ist es aber auch denkbar, dass zwei Lagermodule zumindest teilweise unterschiedlich ausgebildet sind. Unter einem "ersten Lagerelement" soll insbesondere ein Lagerelement verstanden werden, das insbesondere als ein Primärlagerelement ausgebildet ist, das in einem Normalbetriebszustand für die bewegliche Lagerung des zu lagernden Elements, wie insbesondere der Türeinheit, vorgesehen ist. Das erste Lagerelement ist vorzugsweise als eine Führungsschiene ausgebildet. Das erste Lagerelement ist vorzugsweise insbesondere als eine Primärführungsschiene ausgebildet. Unter einer "Führungsschiene" soll insbesondere ein Linearführungselement verstanden werden, das dazu vorgesehen ist, eine Lagerbahn, vorzugsweise eine gerade Lagerachse auszubilden, entlang der ein weiteres Element linear auf der Führungsschiene verschiebbar ist. Eine Führungsschiene ist dazu vorgesehen, dass ein Führungselement form- und/oder kraftschlüssig auf ihr angebunden ist, wobei das Führungselement zumindest entlang einer Bahn, insbesondere entlang der Lagerachse einen Freiheitsgrad relativ zu der Führungsschiene aufweist. Unter einem "zweiten Lagerelement" soll insbesondere ein Element verstanden werden, das korrespondierend zu dem ersten Lagerelement ausgebildet und dazu vorgesehen ist, beweglich zu dem ersten Lagerelement gelagert zu sein. Das zweite Lagerelement ist vorzugsweise entlang der Lagerbahn beweglich zu dem ersten Lagerelement gelagert. Das zweite Lagerelement ist vorzugsweise als ein Lagerschlitten ausgebildet. Das zweite Lagerelement weist vorzugsweise einen Grundkörper und wenigstens ein mit dem Grundkörper verbundenes Führungselement auf, das dazu vorgesehen ist, mit dem ersten Führungselement zur beweglichen Lagerung des zweiten Lagerelements verbunden zu werden. Ein drittes Lagerelement ist als ein Sekundärlagerelement ausgebildet, das in einem von einem Normalbetriebszustand unterschiedlichen Betriebszustand für die bewegliche Lagerung des zu lagernden Elements, wie insbesondere der Türeinheit, vorgesehen ist. Das dritte Lagerelement ist vorzugsweise insbesondere bei einer defekten oder klemmenden Lagerung mittels des ersten und zweiten Lagerelements dazu vorgesehen, das zu lagernde Element, insbesondere die Türeinheit, beweglich zu lagern. Das dritte Lagerelement ist vorzugsweise als eine Führungsschiene ausgebildet. Das dritte Lagerelement ist vorzugsweise insbesondere als eine Sekundärführungsschiene ausgebildet. Das dritte Lagerelement ist vorzugsweise dazu vorgesehen, das zu lagernde Element in einem Bereich von zumindest 50%, vorzugsweise 75% und besonders bevorzugt zu 100% einer Länge der beweglichen Lagerung über das erste und zweite Lagerelement zu lagern. Besonders bevorzugt ist das dritte Lagerelement dazu vorgesehen, das zu lagernde Elemente, insbesondere die Türeinheit, in einem im Wesentlichen gleichen Bewegungsbereich zu lagern wie das erste und das zweite Lagerelement. Insbesondere ist das dritte Lagerelement dazu vorgesehen, das zu lagernde Element, insbesondere die Türeinheit über einen gesamten Bewegungsbereich zwischen der geschlossenen und geöffneten Stellung beweglich zu lagern.

Unter einem "von einem Normalbetriebszustand unterschiedlichen Betriebszustand" soll insbesondere ein Zustand verstanden werden, in dem auf die Lagervorrichtung, insbesondere auf die Lagerelemente zumindest eines Lagermoduls eine Überlast, also eine größere als zulässige Kraft wirkt. Die Überlast wird dabei vorzugsweise von einer Person, beispielsweise von einem Passagier oder einem Crewmitglied ausgeübt, insbesondere durch eine Krafteinwirkung, insbesondere ein Drücken auf die Türeinheit. In dem von einem Normalbetriebszustand unterschiedlichen Betriebszustand ist vorzugsweise insbesondere eine normale Funktionsweise eines Lagermoduls beeinträchtigt. Insbesondere ist in dem vom einem Normalbetriebszustand unterschiedlichen Betriebszustand eine Lagerung zwischen dem ersten Lagerelement und dem zweiten Lagerelement gestört, beispielsweise durch Verklemmen der beiden Lagerelemente zueinander, beispielsweise durch Verformung zumindest eines der beiden Lagerelemente, durch eine Blockierung der beiden Lagerelemente durch ein zusätzliches Element, oder beispielsweise durch eine Verschmutzung oder Verklebung (beispielsweise durch Kaugummi) des ersten oder zweiten Lagerelements. Unter einem "von einem Normalbetriebszustand unterschiedlichen Betriebszustand" kann bei einer elektrischen Aktuierung der Verstellung der Türeinheit zwischen der geschlossenen und geöffneten Stellung durch einen Elektromotor, auch ein Ausfall der Elektrik, insbesondere des Elektromotors verstanden werden. In dem von einem Normalbetriebszustand unterschiedlichen Betriebszustand ist insbesondere eine Verstellung der Türeinheit durch eine Relativbewegung des ersten Lagerelements und des zweiten Lagerelements zueinander nicht möglich. In dem von einem Normalbetriebszustand unterschiedlichen Betriebszustand sind das erste Lagerelement und das zweite Lagerelement durch eine Fehlfunktion positionsfest miteinander verbunden. Unter der Wendung "das zweite Lagerelement beweglich zu lagern" soll insbesondere verstanden werden, dass das zweite Lagerelement insbesondere relativ zu dem dritten Lagerelement und dadurch zu dem Bauteil, an dem das dritte Lagerelement befestigt ist, entlang einer Bewegungsbahn, vorzugsweise einer Bewegungsachse verschiebbar, insbesondere linear bewegbar ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann vorteilhaft eine Redundanz in die Lagerung einer Türeinheit des Flugzeugsitzmoduls integriert werden und somit eine Gefahr verringert werden, dass sich eine Türeinheit nicht mehr aus ihrer geschlossenen Stellung heraus in Richtung der geöffneten Stellung bewegen lässt. Dadurch kann insbesondere eine Sicherheit eines Flugzeugsitzmoduls verbessert werden, da ein Einschließen eines Passagiers in dem Fluggastsitzbereich durch einen Defekt der Lagerung der Türeinheit vorteilhaft unterbunden werden kann.

Weiter wird vorgeschlagen, dass das zweite Lagerelement dazu vorgesehen ist, in einem Normalbetriebszustand positionssicher an dem dritten Lagerelement fixiert zu sein. Dadurch kann eine Lagerung der Türeinheit in dem Normalbetriebszustand vorteilhaft nur über das erste und das zweite Lagerelement stattfinden.

Ferner wird vorgeschlagen, dass das erste Lagerelement als eine mit der Umhausungseinheit oder der Türeinheit fest angebundene Führungsschiene ausgebildet ist. Unter "fest angebunden" soll insbesondere über eine kraft-, form- und/oder stoffschlüssige Verbindung fest miteinander verbunden verstanden werden, sodass zwei Elemente in einem montierten Zustand keine Relativbewegung zueinander ausführen können. Dadurch kann die Lagervorrichtung besonders vorteilhaft ausgebildet werden.

Es wird weiterhin vorgeschlagen, dass das dritte Lagerelement als eine an der anderen Umhausungseinheit oder Türeinheit fest angebundene Führungsschiene ausgebildet ist. Darunter, dass das dritte Lagerelement an der "anderen Umhausungseinheit oder Türeinheit fest angebunden ist" soll insbesondere verstanden werden, dass das dritte Lagerelement in Bezug auf das erste Lagerelement an der anderen der beiden Einheiten angeordnet ist, also wenn das erste Lagerelement an der Umhausungseinheit angeordnet ist, ist das dritte Lagerelement an der Türeinheit angeordnet und wenn das erste Lagerelement an der Türeinheit angeordnet ist, ist das dritte Lagerelement an der Umhausungseinheit fest angebunden. Dadurch kann die Lagervorrichtung besonders vorteilhaft ausgebildet werden.

Des Weiteren wird vorgeschlagen, dass das zweite Lagerelement als ein Zwischenlagerelement ausgebildet ist, das zwischen dem ersten und dritten Lagerelement angeordnet ist. Unter einem "Zwischenlagerelement" soll insbesondere ein Element verstanden werden, das positionstechnisch und funktionstechnisch zwischen zwei Elementen, insbesondere zwischen dem ersten Lagerelement und dem zweiten Lagerelement angeordnet ist. Eine Kraftübertragung zwischen dem ersten Lagerelement und dem zweiten Lagerelement erfolgt vorzugsweise zumindest im Wesentlichen über das Zwischenlagerelement. Dadurch kann das zweite Lagerelement besonders vorteilhaft ausgebildet werden.

Weiterhin wird vorgeschlagen, dass das zweite Lagerelement als ein Lagerschlitten ausgebildet ist, das über ein Gleit- und/oder Drehlager relativ zu dem ersten und dem dritten Lagerelement gelagert ist. Unter einem "Lagerschlitten" soll insbesondere ein Element verstanden werden, das vorzugsweise einen Grundkörper und wenigstens ein mit dem Grundkörper verbundenes Führungselement aufweist, das über eine Gleit- oder Drehlagerung mit dem ersten und dem dritten Lagerelement beweglich gelagert ist. Unter einem "Gleitlager" soll insbesondere ein Lager verstanden werden, bei dem zwei zueinander gelagerte Elemente in einem direkten Kontakt stehen und bei einer Relativbewegung zueinander, aufeinander abgleiten. Unter einem "Drehlager" soll insbesondere eine Lagerung verstanden werden, bei der ein Lagerbauteil, wie insbesondere ein Wälzlager oder eine Rolle, bei einer Relativbewegung der zwei Lagerelemente zueinander auf einer Führungsbahn abrollt. Grundsätzlich ist es auch denkbar, dass ein Lagerelement als eine Zahnstange, ein Zahnrad, eine Spindel, ein Zahnriemen oder ein anderes Lagerelement ausgebildet ist, über das eine Bewegung auf die Türeinheit übertragen werden kann. Dadurch kann das zweite Lagerelement besonders vorteilhaft ausgebildet werden.

Außerdem wird vorgeschlagen, dass das Lagermodul eine Verriegelungseinheit aufweist, die dazu vorgesehen ist, das zweite Lagerelement in einem Normalbetriebszustand positionsfest mit dem dritten Lagerelement zu koppeln. Unter einer "Verriegelungseinheit" soll insbesondere eine Einheit verstanden werden, die dazu vorgesehen ist, zwei Elemente in einem Zustand, vorzugsweise in einem Normalbetriebszustand fix miteinander zu koppeln und in einem zweiten Zustand, insbesondere einem Überlastfall eine Kopplung aufzuheben und dadurch eine Bewegung der zwei Elemente zueinander zuzulassen. Die Verriegelungseinheit kann vorzugsweise von zumindest zwei miteinander kraft- und/oder formschlüssig miteinander verbindbaren Verriegelungselementen ausgebildet sein. Grundsätzlich ist es auch denkbar, dass die Verriegelungseinheit durch eine Sollbruchstelle gebildet ist, die in einem Überlastfall irreversibel bricht. Unter "positionsfest koppeln" soll insbesondere in einer definierten Stellung zueinander miteinander verbunden verstanden werden, wobei insbesondere im Wesentlichen keine Relativbewegung zwischen zwei gekoppelten Elementen möglich ist. Die Verriegelungseinheit ist vorzugsweise insbesondere dazu vorgesehen, eine Kopplung und eine Entkopplung des zweiten Lagerelements zu dem ersten Lagerelement selbsttätig vorzunehmen. Grundsätzlich ist es auch denkbar, dass die Verriegelungseinheit ein gesteuertes Verriegelungselement aufweist, das aufgrund eines Sensorsignals oder aufgrund einer Betätigung eines Betätigungselements durch einen Bediener zwischen einer Koppelstellung und einer Entkoppelstellung verstellt werden kann. Dadurch kann das Lagermodul besonders vorteilhaft ausgebildet werden.

Es wird weiter vorgeschlagen, dass die Verriegelungseinheit dazu vorgesehen ist, das zweite Lagerelement kraft- und/oder formschlüssig zu verriegeln. Unter "kraft- und/oder formschlüssig verriegeln" soll insbesondere verstanden werden, dass eine Verriegelung in dem Normalbetriebszustand durch eine kraftschlüssige Verbindung und/oder durch eine formschlüssige Verbindung zwischen zwei Verriegelungselementen hergestellt wird. Dadurch kann die Verriegelungseinheit besonders vorteilhaft ausgebildet werden.

Zudem wird vorgeschlagen, dass die Verriegelungseinheit ein fest mit der Umhausungseinheit oder der Türeinheit verbundenes Verriegelungselement aufweist, das dazu vorgesehen ist, bei einer definierten Kraft die Verriegelungseinheit zu entkoppeln. Unter einem "Verriegelungselement" soll insbesondere ein Element verstanden werden, das in einem Normalbetriebszustand kraft- und/oder formschlüssig mit einem korrespondierend ausgebildeten Element verbunden ist und in einem weiteren, von dem Normalbetriebszustand unterschiedlichen Betriebszustand, ab einer definierten wirkenden Kraft selbsttätig die Verriegelungseinheit entkoppelt. Dadurch kann die Verriegelungseinheit besonders vorteilhaft ausgebildet werden.

Weiter wird vorgeschlagen, dass das Verriegelungselement zur Entkopplung dazu vorgesehen ist, zumindest teilweise elastisch verformt zu werden. Unter "zumindest teilweise elastisch verformen" soll insbesondere verstanden werden, dass zumindest ein Teilbereich des Verriegelungselements elastisch verformt wird. Das Verriegelungselement ist vorzugsweise von einem elastisch verformbaren Material, vorzugsweise insbesondere einem Polymer, einem Kautschukpolymer, Naturkautschuk oder einem anderen Kunststoff, gebildet. Grundsätzlich ist es auch denkbar, dass das Verriegelungselement von einem anderen elastisch verformbaren Material gebildet ist. Grundsätzlich ist es ebenso denkbar, dass das Verriegelungselement zumindest zweitteilig aufgebaut ist und einen elastisch verformbaren Teilbereich und einen nicht elastisch verformbaren Teilbereich aufweist. Dadurch kann das Verriegelungselement besonders einfach und insbesondere vorteilhaft für eine reversible Verriegelung der Verriegelungseinheit ausgebildet werden.

Ferner wird vorgeschlagen, dass die Verriegelungseinheit ein als Haltekontur ausgebildetes Verriegelungselement aufweist, das dazu vorgesehen ist, das Verriegelungselement in dem Normalbetriebszustand zu halten. Unter einer "Haltekontur" soll insbesondere eine Kontur verstanden werden, in die ein korrespondierend ausgebildetes Verriegelungselement in einem Normalbetriebszustand formschlüssig eingreift. Grundsätzlich wäre es auch denkbar, dass die Haltekontur zumindest teilweise elastisch verformbar ist. Dabei wäre es denkbar, dass das Verriegelungselement nicht, oder nur minimal elastisch verformbar ist. Vorzugsweise ist für die Überdrückung der Haltekontur eine Kraft von zumindest 110N notwendig. Dadurch kann die Verriegelungseinheit besonders einfach ausgebildet werden.

Es wird weiterhin vorgeschlagen, dass die Verriegelungseinheit dazu vorgesehen ist, nach einer Entriegelung wieder in ihre Verriegelstellung gebracht zu werden. Dadurch kann die Türeinheit nach einer Entriegelung vorteilhaft wieder in ihre Normalstellung gebracht werden.

Des Weiteren wird vorgeschlagen, dass das zweite Lagerelement die Türeinheit zumindest in einem Teilbereich umgreift. Dadurch kann eine besonders vorteilhafte Lagereinheit bereitgestellt werden.

Ferner wird vorgeschlagen, dass das Anbindungselement einen Anbindungsbereich aufweist, in dem das zweite Lagerelement in dem Normalbetriebszustand positionssicher fixiert ist. Dadurch kann das Lagerelement vorteilhaft mit dem Anbindungselement verbunden werden.

Zudem wird vorgeschlagen, dass der Anbindungsbereich als eine Gleitschiene ausgebildet ist. Dadurch kann der Anbindungsbereich besonders vorteilhaft ausgebildet werden.

Des Weiteren wird vorgeschlagen, dass die Türeinheit in dem von dem Normalbetriebszustand unterschiedlichen Betriebszustand dazu vorgesehen ist, in einem unteren Bereich freischwingend zu sein. Dadurch kann vorzugsweise ein unteres Lagermodul der Lagervorrichtung besonders einfach und bauteilarm ausgebildet werden.

Das erfindungsgemäße Flugzeugsitzmodul soll hierbei nicht auf die oben beschriebene Anwendung und Ausführungsform beschränkt sein. Insbesondere kann das erfindungsgemäße Flugzeugsitzmodul zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind fünf Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Draufsicht auf ein Teil einer Flugzeugsitzkabine mit einem Flugzeugsitzmodul mit einer Umhausungseinheit und einer Türeinheit,
- Fig. 2: eine schematische Detailansicht eines ersten Lagermoduls einer Lagervorrichtung zur Lagerung der Türeinheit,
- Fig. 3: eine schematische Schnittansicht durch das erste Lagermodul,
- Fig. 4: eine weitere schematische Ansicht des Lagermoduls in einem Normalbetriebszustand,
- Fig. 5: eine schematische Ansicht des ersten Lagermoduls in einem von dem Normalbetriebszustand unterschiedlichen Betriebszustand,
- Fig. 6: eine weitere schematische Ansicht des ersten Lagermoduls in einem von dem Normalbetriebszustand unterschiedlichen Betriebszustand,
- Fig. 7: eine schematische Darstellung eines zweiten Lagermoduls der Lagervorrichtung in einem Normalbetriebszustand,
- Fig. 8: eine schematische Schnittansicht durch das zweite Lagermodul,
- Fig. 9: eine schematische Ansicht eines Teils eines Flugzeugsitzmoduls mit einer Umhausungseinheit und einer über eine Lagervorrichtung gelagerte Türeinheit in einem zweiten Ausführungsbeispiel,
- Fig. 10: eine schematische Schnittansicht durch die Türeinheit und die Lagervorrichtung,
- Fig. 11: eine schematische Schnittansicht der Lagervorrichtung,
- Fig. 12: eine schematische Schnittansicht durch eine Lagervorrichtung eines Flugzeugsitzmoduls in einem dritten Ausführungsbeispiel,
- Fig. 13: eine schematische Ansicht eines Teils einer Lagervorrichtung eines Flugzeugsitzmoduls in einem vierten Ausführungsbeispiel,
- Fig. 14: eine schematische Teildarstellung einer Lagervorrichtung eines Flugzeugsitzmoduls in einem fünften Ausführungsbeispiel,
- Fig. 15: eine weitere Darstellung der Lagervorrichtung im fünften Ausführungsbeispiel und
- Fig. 16: eine Darstellung der Lagervorrichtung im fünften Ausführungsbeispiel in einem vom Normalbetriebszustand unterschiedlichen Betriebszustand.

### Beschreibung der Ausführungsbeispiele

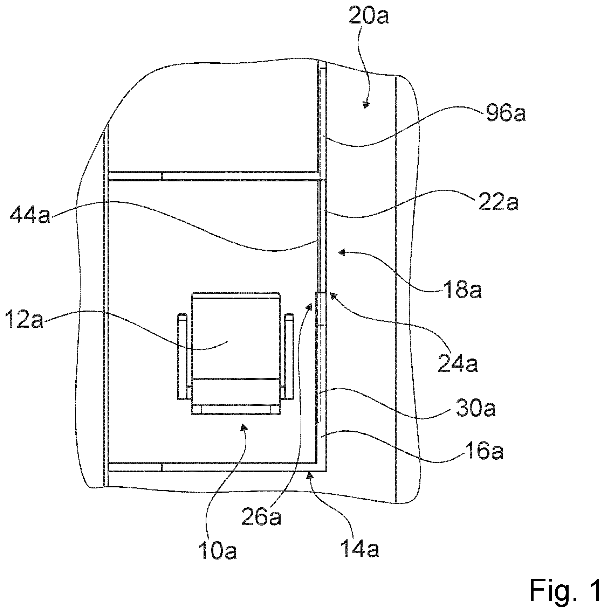

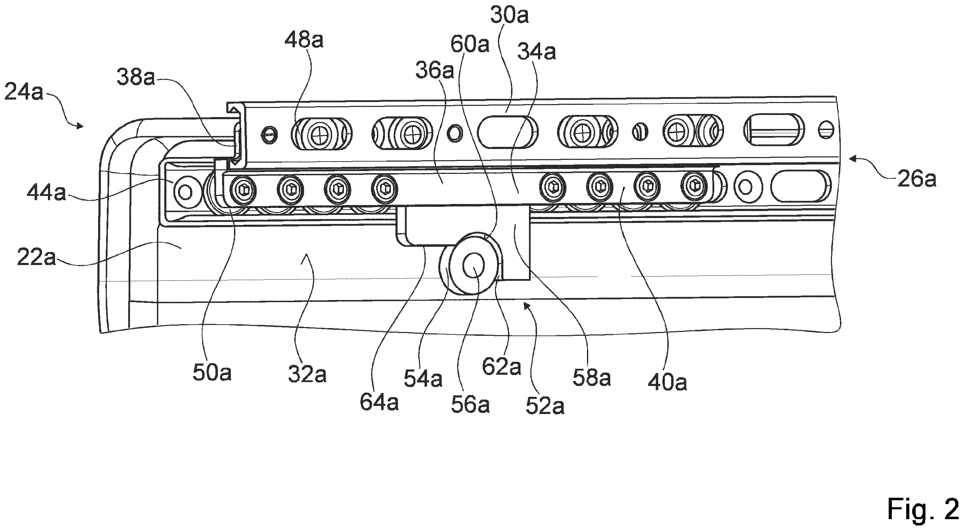

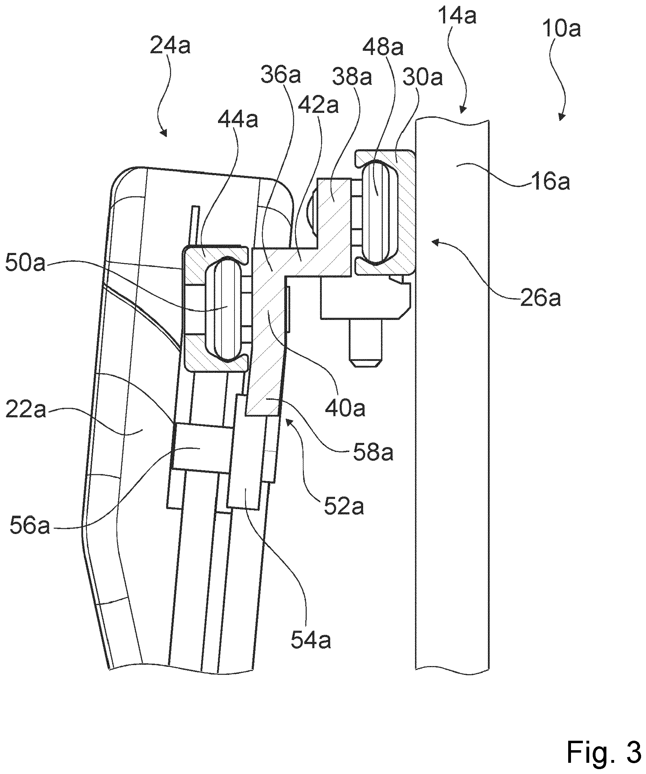

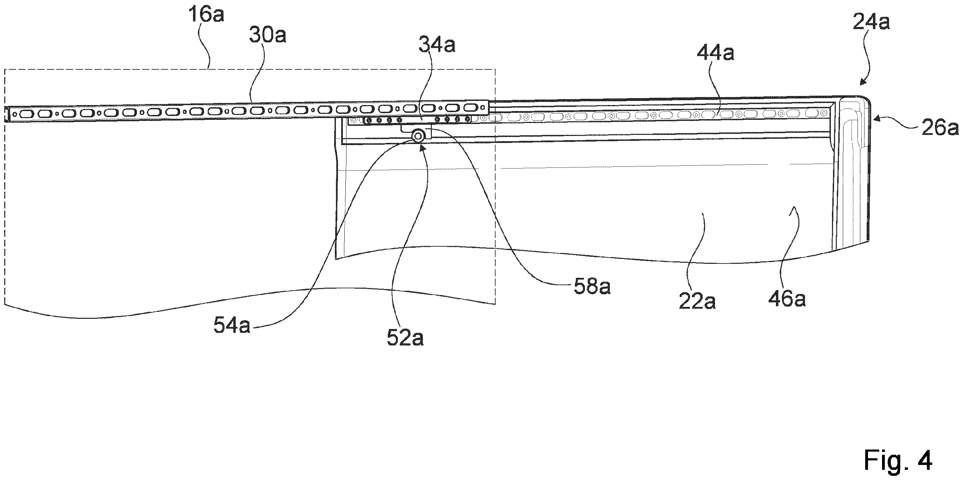

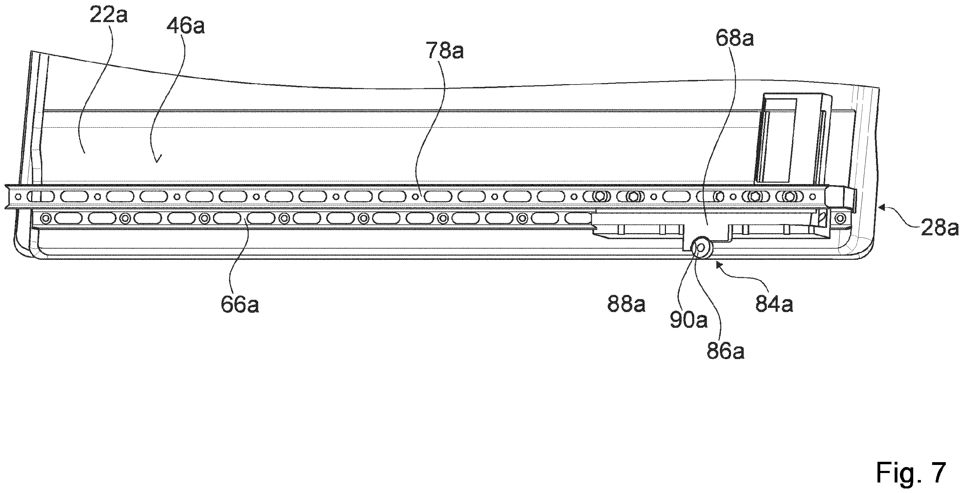

In den Figuren 1 bis 8 ist ein erstes Ausführungsbeispiel des Flugzeugsitzmoduls gezeigt. Das Flugzeugsitzmodul ist als ein Teil einer Innenausstattung einer Flugzeugkabine ausgebildet. In einer Flugzeugkabine sind vorzugsweise mehrere Flugzeugsitzmodule angeordnet. Das Flugzeugsitzmodul bildet einen Fluggastsitzbereich 10a aus. Der Fluggastsitzbereich 10a ist als ein Bereich ausgebildet, den insbesondere ein Passagier während eines Fluges für sich zur Verfügung hat. Der Fluggastsitzbereich 10a ist vorzugsweise insbesondere als ein Businessclass- oder Firstclass-Fluggastsitzbereich ausgebildet. Die Flugzeugkabine weist zumindest einen Gangbereich 20a auf. Über den Gangbereich 20a ist der Fluggastsitzbereich 10a insbesondere für einen Passagier erreichbar. Das Flugzeugsitzmodul umfasst einen Flugzeugsitz 12a, der in dem Fluggastsitzbereich 10a angeordnet ist. Der Flugzeugsitz 12a ist vorzugsweise insbesondere als ein Flugzeugsitz 12a ausgebildet, der von zumindest einer Sitzposition in eine Liegeposition verstellbar ist. Das Flugzeugsitzmodul weist eine Umhausungseinheit 14a auf. Die Umhausungseinheit 14a ist dazu vorgesehen, den Fluggastsitzbereich 10a zumindest teilweise von einem Rest der Flugzeugkabine abzutrennen. Die Umhausungseinheit 14a ist dazu vorgesehen, den Fluggastsitzbereich 10a zumindest im Wesentlichen zu umgeben. Die Umhausungseinheit 14a ist insbesondere dazu vorgesehen, den Fluggastsitzbereich 10a räumlich von einem Rest der Flugzeugkabine, insbesondere einem Kabinengang, abzutrennen, um insbesondere eine erhöhte Privatsphäre für einen Passagier in dem Fluggastsitzbereich 10a zu schaffen. Die Umhausungseinheit 14a erstreckt sich vorzugsweise bis auf eine Höhe von 1,30 m. Eine Höhe entspricht dabei den vorgegebenen Luftfahrtstandards, die sich durchaus auch ändern können. Grundsätzlich ist es auch denkbar, dass sich die Umhausungseinheit 14a in Teilbereichen bis auf eine andere Höhe und/oder auch bis an eine Kabinendecke der Flugzeugkabine erstreckt. Die Umhausungseinheit 14a kann dabei in unterschiedlichen Teilbereichen auch unterschiedliche Höhen aufweisen. Die Umhausungseinheit 14a weist ein Umhausungselement 16a auf. Das Umhausungselement 16a umgibt den Fluggastsitzbereich 10a zumindest teilweise. Das Umhausungselement 16a kann grundsätzlich alleine oder zusammen mit einer Umhausungseinheit 14a eines anderen Flugzeugsitzmoduls den Fluggastsitzbereich 10a abtrennen. Das Umhausungselement 16a ist vorzugsweise aus einem Composite-Material gebildet. Grundsätzlich ist es auch denkbar, dass das Umhausungselement 16a aus einem anderen, dem Fachmann als sinnvoll erscheinenden Material gebildet ist. Grundsätzlich ist es auch denkbar, dass die Umhausungseinheit 14a mehrere Umhausungselemente 16a aufweist. Die Umhausungseinheit 14a bildet einen Durchgangsbereich 18a aus. Der Durchgangsbereich 18a verbindet den Fluggastsitzbereich 10a und den angrenzenden Gangbereich 20a der Flugzeugkabine. Durch den Durchgangsbereich 18a kann eine Person, insbesondere ein Passagier, von dem Gangbereich 20a in den Fluggastsitzbereich 10a gelangen und umgekehrt. In dem Durchgangsbereich 18a ist vorzugsweise kein Umhausungselement 16a angeordnet. Der Durchgangsbereich 18a weist vorzugsweise eine Breite von 38 cm auf.

Das Flugzeugmodul umfasst eine Türeinheit 22a. Die Türeinheit 22a ist dazu vorgesehen, zumindest in einem Betriebszustand den Fluggastsitzbereich 10a zumindest teilweise von einem angrenzenden Kabinenbereich, insbesondere dem Gangbereich 20a, abzugrenzen. Die Türeinheit 22a ist dazu vorgesehen, den Durchgangsbereich 18a in einem geschlossenen Zustand zu verschließen. In einem voll geschlossenen Zustand versperrt die Türeinheit 22a den Durchgangsbereich 18a komplett. Dabei ist es insbesondere denkbar, dass insbesondere in einem unteren Bereich eine Lücke zwischen der Türeinheit 22a und dem Kabinenboden vorhanden bleibt. In dem voll geschlossenen Zustand erstreckt sich die Türeinheit 22a zumindest in einem Teilbereich vollständig zwischen dem Umhausungselement 16a und einem weiteren Umhausungselement 96a, die den Durchgangsbereich 18a begrenzen. Das weitere Umhausungselement 96a kann insbesondere als ein Umhausungselement einer weiteren, vor der Umhausungseinheit 14a angeordneten weiteren Umhausungseinheit sein, die einen weiteren Flugzeugsitz umhaust. In einem geöffneten Zustand ist die Türeinheit 22a dazu vorgesehen, den Durchgangsbereich 18a freizugeben. In dem geöffneten Zustand ist die Türeinheit 22a vorzugsweise komplett aus dem Durchgangsbereich 18a herausbewegt. Die Türeinheit 22a ist an der Umhausungseinheit 14a, insbesondere an dem Umhausungselement 16a, angebunden. Grundsätzlich wäre es ebenso denkbar, dass die Türeinheit 22a an dem weiteren Umhausungselement 96a der vorderen Umhausungseinheit angebunden ist.

Das Flugzeugsitzmodul weist zur Lagerung der Türeinheit 22a eine Lagervorrichtung 24a auf. Die Lagervorrichtung 24a ist dazu vorgesehen, die Türeinheit 22a beweglich an der Umhausungseinheit 14a zu lagern. Die Türeinheit 22a ist über die Lagervorrichtung 24a an das Umhausungselement 16a angebunden. Mittels der Lagervorrichtung 24a ist die Türeinheit 22a zwischen dem geöffneten Zustand und dem geschlossenen Zustand verstellbar. Die Lagervorrichtung 24a ist vorzugsweise als eine Linearlagervorrichtung ausgebildet. Mittels der als Linearlagervorrichtung ausgebildeten Lagervorrichtung 24a ist die Türeinheit 22a linear zwischen einer geschlossenen Stellung und einer geöffneten Stellung verschiebbar.

Die Lagervorrichtung 24a weist ein erstes Lagermodul 26a auf. Das erste Lagermodul 26a ist dazu vorgesehen, die Türeinheit 22a in einem oberen Bereich zu lagern. Das erste Lagermodul 26a ist insbesondere in einem oberen Bereich der Türeinheit 22a angeordnet. Die Lagervorrichtung 24a weist ein zweites Lagermodul 28a auf. Das zweite Lagermodul 28a ist dazu vorgesehen, die Türeinheit 22a in einem unteren Bereich zu lagern. Das zweite Lagermodul 28a ist in einem unteren Bereich der Türeinheit 22a angeordnet. Durch die zwei Lagermodule 26a, 28a, die an zwei gegenüberliegenden Bereichen der Türeinheit 22a angeordnet sind, kann eine besonders gleichmäßige Lagerung der Türeinheit 22a erreicht werden.

Das erste Lagermodul 26a umfasst ein erstes Lagerelement 30a. Das erste Lagerelement 30a ist als eine Führungsschiene ausgebildet, insbesondere als eine Primärführungsschiene. Das erste Lagerelement 30a bildet eine Führungskontur aus, die vorzugsweise einen Hinterschnitt aufweist. Das als Führungsschiene ausgebildete erste Lagerelement 30a weist eine längliche Haupterstreckung auf. Das erste Lagerelement 30a bildet eine Lagerbahn aus, entlang der Elemente relativ zu dem Lagerelement 30a bewegbar, insbesondere axial verschiebbar, gelagert werden können. Das erste Lagerelement 30a ist fest mit der Umhausungseinheit 14a verbunden. Das erste Lagerelement 30a ist insbesondere fest mit dem Umhausungselement 16a verbunden. Das erste Lagerelement 30a ist auf einer Innenseite 32a des Umhausungselements 16a angebunden. Vorzugsweise ist das erste Lagerelement 30a mittels Schraubenverbindungen fest mit dem Umhausungselement 16a verbunden. Grundsätzlich ist es auch denkbar, dass das erste Lagerelement 30a beispielsweise über eine Klebe- oder Clipverbindung fest und positionssicher mit dem Umhausungselement 16a verbunden ist.

Das erste Lagermodul 26a umfasst ein zweites Lagerelement 34a. Das zweite Lagerelement 34a ist als ein Zwischenelement ausgebildet. Das zweite Lagerelement 34a ist vorzugsweise insbesondere als ein Lagerschlitten ausgebildet. Das zweite Lagerelement 34a weist einen Grundkörper 36a auf. Der Grundkörper 36a weist eine längliche Erstreckung auf. Der Grundkörper 36a bildet einen ersten Anbindungsbereich 38a aus. Der erste Anbindungsbereich 38a bildet einen oberen Teil des Grundkörpers 36a aus. Der erste Anbindungsbereich 38a ist zur Anbindung des ersten Lagerelements 30a vorgesehen. Der Grundkörper 36a weist einen zweiten Anbindungsbereich 40a auf. Der zweite Anbindungsbereich 40a bildet einen unteren Teil des Grundkörpers 36a aus. Der zweite Anbindungsbereich 40a ist insbesondere zur Anbindung eines weiteren Elements, vorzugsweise insbesondere eines weiteren Lagerelements, vorgesehen. Die beiden Anbindungsbereiche 38a, 40a erstrecken sich jeweils in einer Horizontalrichtung. Die Anbindungsbereiche 38a, 40a sind in einer Querrichtung beabstandet zueinander angeordnet. Die beiden Anbindungsbereiche 38a, 40a sind an einem unteren Ende des ersten Anbindungsbereichs 38a und an einem oberen Ende des zweiten Anbindungsbereichs 40a durch einen Mittelbereich 42a miteinander verbunden. Die beiden Anbindungsbereiche 38a, 40a und der Mittelbereich 42a bilden den Grundkörper 36a zusammen, vorzugsweise einstückig, aus.

Das erste Lagermodul 26a umfasst ein drittes Lagerelement 44a. Das dritte Lagerelement 44a ist als eine Führungsschiene ausgebildet. Das dritte Lagerelement 44a ist insbesondere als eine Sekundärführungsschiene ausgebildet. Das als Führungsschiene ausgebildete dritte Lagerelement 44a weist eine längliche Haupterstreckung auf. Das dritte Lagerelement 44a bildet eine Führungskontur aus, die vorzugsweise einen Hinterschnitt aufweist. Das dritte Lagerelement 44a ist fest mit der Türeinheit 22a verbunden. Das dritte Lagerelement 44a bildet eine Lagerbahn aus, entlang der Elemente relativ zu dem dritten Lagerelement 44a bewegbar, insbesondere axial verschiebbar, gelagert werden können. Das dritte Lagerelement 44a ist auf einer Innenseite 46a der Türeinheit 22a angebunden. Vorzugsweise ist das dritte Lagerelement 44a mittels Schraubenverbindungen fest mit der Türeinheit 22a verbunden. Grundsätzlich ist es auch denkbar, dass das dritte Lagerelement 44a beispielsweise über eine Klebe- oder Clipverbindung fest und positionssicher mit der Türeinheit 22a verbunden ist. Vorzugsweise ist das dritte, als Lagerschiene ausgebildete Lagerelement 44a, parallel zu dem ersten Lagerelement 30a ausgerichtet. Vorzugsweise weist das dritte Lagerelement 44a eine zu dem ersten Lagerelement 30a korrespondierende Ausrichtung auf. Grundsätzlich ist es allerdings auch denkbar, dass das dritte Lagerelement 44a um einen Winkel, vorzugsweises um 90 Grad zu dem ersten Lagerelement 30a verkippt ist, wobei die Führungskonturen stets parallel ausgerichtet sind. Durch eine verkippte Anordnung des dritten Lagerelements 44a kann das Lagermodul 26a insbesondere platzsparender ausgebildet und/oder an bauliche Gegebenheiten angepasst werden.

Das zweite Lagerelement 34a ist beweglich mit dem ersten Lagerelement 30a verbunden. Das zweite Lagerelement 34a ist insbesondere entlang der Lagerbahn des ersten Lagerelements 30a linear verschiebbar zur dem ersten Lagerelement 30a gelagert. Das zweite Lagerelement 34a weist mehrere Drehlager 48a auf, über die das zweite Lagerelement 34a verschiebbar zu dem ersten Lagerelement 30a gelagert ist. Die Drehlager 48a sind als drehbar an dem Grundkörper 36a des zweiten Lagerelements 34a befestigte Rollenelemente ausgebildet. Die Drehlager 48a sind insbesondere über - Gleitlager drehbar an den Grundkörper 36a angebunden. Insbesondere sind die Drehlager 48a vorzugsweise auf einem Zapfen gleitend gelagert. Grundsätzlich wäre es auch denkbar, dass die als Rollenelemente ausgebildeten Drehlager 48a auch über eine Wälzlagerung drehbar auf einem Zapfen gelagert sind. Die Drehlager 48a sind insbesondere in dem ersten Anbindungsbereich 38a des Grundkörpers 36a angebracht. Die Drehlager 48a sind insbesondere über eine Länge des Grundkörpers 36a verteilt. Vorzugsweise sind die Drehlager 48a dabei gleichmäßig in Haupterstreckungsrichtung des Grundkörpers 36a verteilt. In dem vorliegenden Beispiel weist das zweite Lagerelement 34a acht Drehlager 48a auf. Grundsätzlich ist auch eine andere Anzahl an Drehlager 48a denkbar. Vorzugsweise weist das zweite Lagerelement 34a zwei Drehlager 48a auf. Die Drehlager 48a sind in einem montierten Zustand in dem als Führungsschiene ausgebildeten ersten Lagerelement 30a angeordnet. Die Drehlager 48a sind insbesondere in der Führungskontur des ersten Lagerelements 30a angeordnet. Die Drehlager 48a sind dazu vorgesehen, zur verschiebbaren Lagerung der Türeinheit 22a in der Führungskontur des ersten Lagerelements 30a anzurollen.

In einem Normalbetriebszustand ist das Lagermodul 26a dazu vorgesehen, die Türeinheit 22a über das erste Lagerelement 30a und das zweite Lagerelement 34a beweglich zu lagern. In dem Normalbetriebszustand wird eine Verstellung zwischen der geschlossenen und der geöffneten Stellung der Türeinheit 22a durch eine Relativbewegung des zweiten Lagerelements 34a und des ersten Lagerelements 30a hervorgerufen. Zur Verstellung der Türeinheit 22a zwischen der geschlossenen und der geöffneten Stellung laufen die Drehlager 48a des zweiten Lagerelements 34a in der Führungskontur des ersten Lagerelements 30a. Eine Verstellkraft zur Verstellung der Türeinheit 22a kann dabei von einer Person, beispielsweise einem Passagier, direkt auf die Türeinheit 22a ausgeübt werden. Grundsätzlich ist es auch denkbar, dass eine Verstellkraft von einem Aktuator, der von einer Person, beispielsweise einem Passagier, betätigt wird, auf die Türeinheit 22a ausgeübt wird.

Das zweite Lagerelement 34a ist beweglich mit dem dritten Lagerelement 44a verbunden. Das zweite Lagerelement 34a ist insbesondere entlang der Lagerbahn des dritten Lagerelements 44a linear verschiebbar zur dem dritten Lagerelement 44a gelagert. Das zweite Lagerelement 34a weist mehrere Drehlager 50a auf, über die das zweite Lagerelement 34a verschiebbar zu dem dritten Lagerelement 44a gelagert ist. Die Drehlager 50a sind als drehbar an dem Grundkörper 36a des zweiten Lagerelements 34a befestigte Rollenelemente ausgebildet. Die Drehlager 50a sind insbesondere über Gleitlager drehbar an den Grundkörper 36a angebunden. Insbesondere sind die Drehlager 50a vorzugsweise auf einem Zapfen gleitend gelagert. Grundsätzlich wäre es auch denkbar, dass die als Rollenelemente ausgebildeten Drehlager 50a auch über eine Wälzlagerung drehbar auf einem Zapfen gelagert sind. Die Drehlager 50a sind insbesondere in dem zweiten Anbindungsbereich 40a des Grundkörpers 36a angebracht. Der zweite Anbindungsbereich 40a ist zur Anbindung des dritten Lagerelements 44a vorgesehen. Die Drehlager 50a sind insbesondere über eine Länge des Grundkörpers 36a verteilt. Vorzugsweise sind die Drehlager 50a dabei gleichmäßig in Haupterstreckungsrichtung des Grundkörpers 36a verteilt. In dem vorliegenden Beispiel weist das zweite Lagerelement 34a acht Drehlager 50a auf. Grundsätzlich ist auch eine andere Anzahl an Drehlager 50a denkbar. Vorzugsweise weist das zweite Lagerelement 34a zumindest zwei Drehlager 50a auf. Die Drehlager 50a sind in einem montierten Zustand in dem als Führungsschiene ausgebildeten dritten Lagerelement 44a angeordnet. Die Drehlagern 50a sind insbesondere in der Führungskontur des dritten Lagerelements 44a angeordnet. Die Drehlager 48a sind dazu vorgesehen, zur verschiebbaren Lagerung der Türeinheit 22a in der Führungskontur des dritten Lagerelements 44a anzurollen.

Das dritte Lagerelement 44a ist in einem von einem Normalbetriebszustand unterschiedlichen Betriebszustand dazu vorgesehen, das zweite Lagerelement 34a beweglich zu lagern. In dem von einem Normalbetriebszustand unterschiedlichen Betriebszustand ist das Lagermodul 26a dazu vorgesehen, die Türeinheit 22a über das dritte Lagerelement 44a und das zweite Lagerelement 34a beweglich zu lagern. In dem von einem Normalbetriebszustand unterschiedlichen Betriebszustand wird eine Verstellung zwischen der geschlossenen und der geöffneten Stellung der Türeinheit 22a durch eine Relativbewegung des zweiten Lagerelements 34a und des dritten Lagerelements 44a hervorgerufen. Zur Verstellung der Türeinheit 22a zwischen der geschlossenen und der geöffneten Stellung laufen die Drehlager 50a des zweiten Lagerelements 34a in der Führungskontur des dritten Lagerelements 44a. Eine Verstellkraft zur Verstellung der Türeinheit 22a kann dabei von einer Person, beispielsweise einem Passagier, direkt auf die Türeinheit 22a ausgeübt werden.

Grundsätzlich ist es auch denkbar, dass eine Verstellkraft von einem Aktuator, der von einer Person, beispielsweise einem Passagier betätigt wird, auf die Türeinheit 22a ausgeübt wird.

Das zweite Lagerelement 34a ist dazu vorgesehen, in einem Normalbetriebszustand positionssicher an dem dritten Lagerelement 44a fixiert zu sein. Durch die Fixierung des zweiten Lagerelements 34a zu dem dritten Lagerelement 44a wird eine Relativbewegung des zweiten Lagerelements 34a zu dem dritten Lagerelement 44a verhindert. Durch die Fixierung des zweiten Lagerelements 34a zu dem dritten Lagerelement 44a wird insbesondere ein Verschieben der Türeinheit 22a über das zweite Lagerelement 34a und das dritte Lagerelement 44a verhindert. Durch die Fixierung des zweiten Lagerelements 34a zu dem dritten Lagerelement 44a wird eine bewegliche Lagerung der Türeinheit 22a lediglich mittels des ersten Lagerelements 30a und des zweiten Lagerelements 34a durchgeführt. Zur Fixierung des zweiten Lagerelements 34a zu dem dritten Lagerelement 44a weist das Lagermodul 26a eine Verriegelungseinheit 52a auf. Die Verriegelungseinheit 52a ist dazu vorgesehen, das zweite Lagerelement 34a in einem Normalbetriebszustand positionsfest mit dem dritten Lagerelement 44a zu koppeln. Die Verriegelungseinheit 52a ist dazu vorgesehen, das zweite Lagerelement 34a in einem Verriegelungszustand kraft- und formschlüssig zu verriegeln. Die Verriegelungseinheit 52a ist dazu vorgesehen, das zweite Lagerelement 34a in einem Verriegelungszustand kraft- und formschlüssig mit dem dritten Lagerelement 44a zu koppeln. Insbesondere ist die Verriegelungseinheit 52a dazu vorgesehen, das zweite Lagerelement 34a mit dem Element, an dem das dritte Lagerelement 44a angebunden ist, also insbesondere mit der Türeinheit 22a, kraft- und/oder formschlüssig zu verbinden.

Zur Verriegelung des zweiten Lagerelements 34a weist die Verriegelungseinheit 52a ein fest mit der Türeinheit 22a verbundenes Verriegelungselement 54a auf. Das Verriegelungselement 54a ist dazu vorgesehen, bei einer definierten Kraft die Verriegelungseinheit 52a zu entkoppeln. Das Verriegelungselement 54a ist dazu vorgesehen, zumindest teilweise elastisch verformt zu werden. Das Verriegelungselement 54a ist insbesondere aus einem elastischen Kunststoff gebildet. Das Verriegelungselement 54a weist vorzugsweise eine runde Form auf. Das Verriegelungselement 54a ist vorzugsweise ringförmig ausgebildet. Das Verriegelungselement 54a ist über ein Befestigungsmittel 56a, wie beispielsweise eine Schraube oder ein Bolzen/Stift, fest mit der Türeinheit 22a verbunden. Das Verriegelungselement 54a ist auf der Innenseite 46a der Türeinheit 22a angeordnet. Vorzugsweise ist das Verriegelungselement 54a unterhalb des dritten Lagerelements 44a angebracht.

Die Verriegelungseinheit 52a umfasst ein Halteelement 58a. Das Halteelement 58a ist zu einer Verriegelung dazu vorgesehen, mit dem Verriegelungselement 54a kraft- und/oder formschlüssig verbunden zu werden. Das Halteelement 58a ist an dem zweiten Lagerelement 34a angebracht. Das Halteelement 58a ist insbesondere an einer Unterseite des zweiten Lagerelements 34a angeordnet. Vorzugsweise ist das Halteelement 58a einstückig mit dem zweiten Lagerelement 34a ausgebildet. Das Halteelement 58a bildet eine Haltekontur 60a aus. Die Haltekontur 60a ist korrespondierend zu dem Verriegelungselement 54a ausgebildet. Die Haltekontur 60a ist vorzugsweise als eine Vertiefung ausgebildet. Die Haltekontur 60a ist insbesondere als eine kreisförmige Vertiefung ausgebildet. In einer ersten Richtung bildet die Haltekontur 60a einen Abstützbereich 62a aus. Der Abstützbereich 62a ist dazu vorgesehen, dass eine Kraft in einem Normalbetriebszustand daran abgestützt werden kann. Der Abstützbereich 62a kann von dem Verriegelungselement 54a nicht überdrückt werden. In einer zweiten Richtung weist die Haltekontur 60a einen Freigabebereich 64a auf. Der Freigabebereich 64a ist dazu vorgesehen, dass er von dem Verriegelungselement 54a bei einer definierten Kraft überdrückt werden kann, um so insbesondere eine Verriegelung zwischen der Haltekontur 60a und dem Verriegelungselement 54a aufzuheben. Das Verriegelungselement 54a ist zur Entkopplung dazu vorgesehen, elastisch verformt zu werden. Durch die elastische Verformung des Verriegelungselements 54a durch eine einwirkende Kraft kann das Verriegelungselement 54a aus der Haltekontur 60a entfernt werden, um so die Verriegelungseinheit 52a zu entriegeln. Die Verriegelungseinheit 52a ist dazu vorgesehen, nach einer Entriegelung wieder in seine Verriegelstellung gebracht zu werden. Dazu kann das Verriegelungselement 54a wieder in die Haltekontur 60a gedrückt werden.

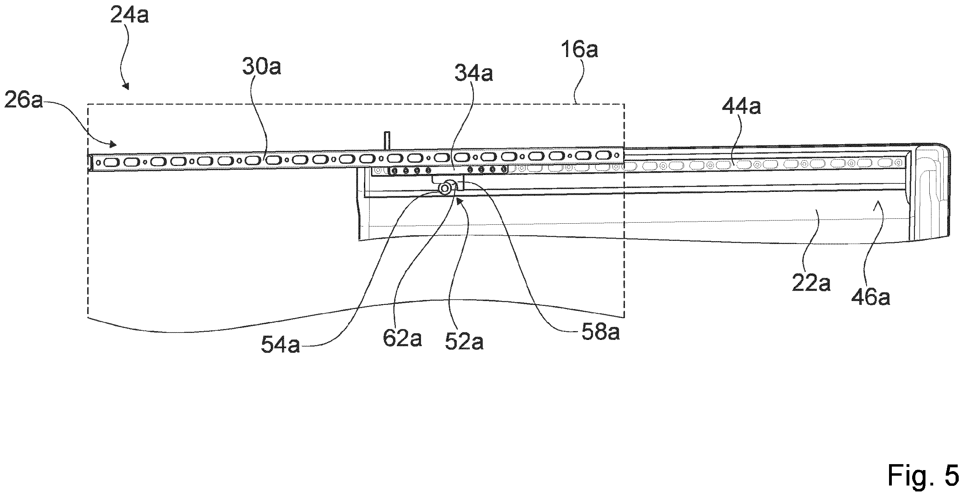

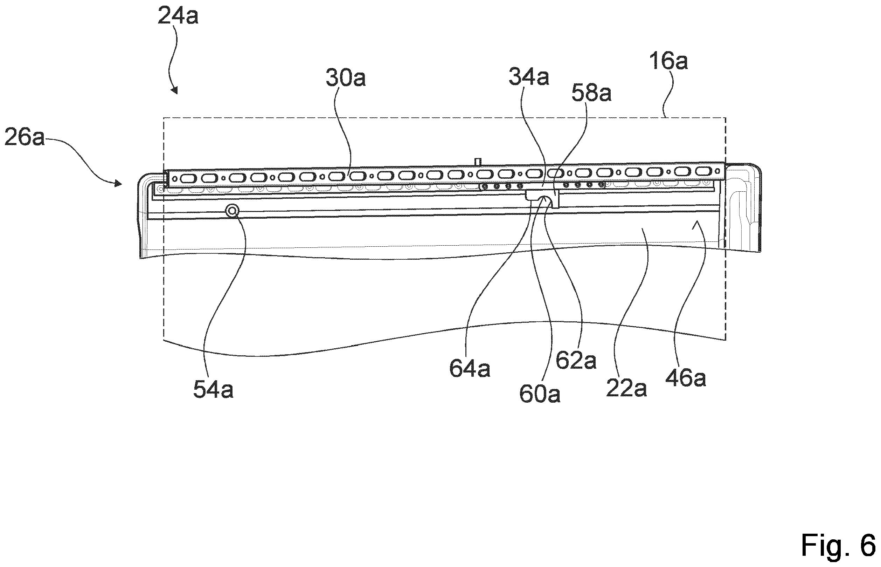

In einem von einem Normalbetriebszustand unterschiedlichen Betriebszustand, in dem die Lagerung über das erste und zweite Lagerelement 30a, 34a nicht möglich ist, kann die Türeinheit 22a mittels des zweiten und des dritten Lagerelements 34a, 44a axial verschoben, insbesondere in eine geschlossene Stellung gebracht werden. Durch das dritte Lagerelement 44a ist insbesondere eine Redundanz geschaffen, die ein Öffnen der Türeinheit 22a auch bei defekter Lagerung mittels des ersten und des zweiten Lagerelements 30a, 34a ermöglicht. Dadurch kann insbesondere eine Sicherheit und ein Komfort erhöht werden, da die Lagervorrichtung 24a störanfälliger ausgebildet ist. Beispielhaft ist hier in Figur 5 und 6 eine Blockierung des zweiten Lagerelements 34a in dem ersten Lagerelement 30a gezeigt. Die Blockierung ist hier beispielhaft durch einen Stift gezeigt, der das zweite Lagerelement 34a in dem ersten Lagerelement 30a blockiert und insbesondere ein Verschieben der Türeinheit 22a in ihre geöffnete Stellung verhindert. Grundsätzlich kann eine solche Blockierung auch durch Schmutz in dem Lagermodul 26a oder durch Beschädigung des ersten Lagerelements 30a oder des zweiten Lagerelements 34a herbeigeführt sein. Das zweite Lagerelement 44a ist fix mit dem ersten Lagerelement 30a verbunden. Wird nun eine Öffnungskraft in Öffnungsrichtung der Türeinheit 22a auf die Türeinheit 22a ausgeübt, beispielsweise durch Drücken eines Passagiers oder Crewmitglieds, wird das Verriegelungselement 54a elastisch verformt und insbesondere über den Freigabebereich 64a der Haltekontur 60a gedrückt (siehe Figur 5). Dadurch wird die Verriegelungseinheit 52a entriegelt und eine positionsfixe Kopplung zwischen dem zweiten Lagerelement 34a und dem dritten Lagerelement 44a wird aufgehoben. Dadurch kann das zweite Lagerelement 34a relativ zu dem dritten Lagerelement 44a axial bewegt werden. Die mit dem dritten Lagerelement 44a fest verbundene Türeinheit 22a kann über das dritte Lagerelement 44a und das zweite Lagerelement 34a axial verschoben werden und so in die geöffnete Stellung gebracht werden. Die Türeinheit 22a wird dabei insbesondere entlang des als Sekundärführungsschiene ausgebildeten dritten Lagerelements 44a verstellt.

Das zweite Lagermodul 28a ist im Wesentlichen ähnlich ausgebildet wie das erste Lagermodul 26a. Insbesondere eine Funktionsweise des zweiten Lagermoduls 28a ist im Wesentlichen identisch zu der Funktionsweise des ersten Lagermoduls 26a. Das zweite Lagermodul 28a weist vorzugsweise im Wesentlichen die gleichen Bauteile auf wie das erste Lagermodul 26a. Im Wesentlichen liegt der Unterschied zwischen dem ersten Lagermodul 26a und dem zweiten Lagermodul 28a darin, dass eine Anordnung einer Primärführungsschiene und einer Sekundärführungsschiene im Gegensatz zu dem ersten Lagermodul 26a vertauscht ist. Insbesondere ist bei dem zweiten Lagermodul 28a eine Primärführungsschiene an der Türeinheit 22a befestigt und eine Sekundärführungsschiene an dem Umhausungselement 16a. Im Folgenden soll das weitere Lagermodul 28a kurz beschrieben werden.

Das zweite Lagermodul 28a umfasst ein erstes Lagerelement 66a. Das erste Lagerelement 66a ist als eine Führungsschiene ausgebildet, insbesondere als eine Primärführungsschiene. Das erste Lagerelement 66a bildet eine Führungskontur aus, die vorzugsweise einen Hinterschnitt aufweist. Das erste Lagerelement 66a ist fest mit der Türeinheit 22a verbunden. Das erste Lagerelement 66a ist auf einer Innenseite 46a der Türeinheit 22a angebunden.

Das zweite Lagermodul 28a umfasst ein zweites Lagerelement 68a. Das zweite Lagerelement 68a ist als ein Zwischenelement ausgebildet. Das zweite Lagerelement 68a ist vorzugsweise insbesondere als ein Lagerschlitten ausgebildet. Das zweite Lagerelement 68a weist einen Grundkörper 70a auf. Der Grundkörper 70a weist eine längliche Erstreckung auf. Der Grundkörper 70a bildet einen ersten Anbindungsbereich 72a aus. Der erste Anbindungsbereich 72a ist zur Anbindung des ersten Lagerelements 66a vorgesehen. Der Grundkörper 70a weist einen zweiten Anbindungsbereich 74a auf. Der zweite Anbindungsbereich 74a ist insbesondere zur Anbindung eines weiteren Elements, vorzugsweise insbesondere eines weiteren Lagerelements, vorgesehen. Die beiden Anbindungsbereiche 72a, 74a erstrecken sich jeweils in einer Horizontalrichtung. Die Anbindungsbereiche 72a, 74a sind in einer Querrichtung beabstandet zueinander angeordnet. Die beiden Anbindungsbereiche 72a, 74a sind durch einen Mittelbereich 76a miteinander verbunden. Die beiden Anbindungsbereiche 72a, 74a und der Mittelbereich 76a bilden den Grundkörper 70a zusammen, vorzugsweise einstückig, aus.

Das zweite Lagermodul 28a umfasst ein drittes Lagerelement 78a. Das dritte Lagerelement 78a ist als eine Führungsschiene ausgebildet. Das dritte Lagerelement 78a ist insbesondere als eine Sekundärführungsschiene ausgebildet. Das als Führungsschiene ausgebildete dritte Lagerelement 78a weist eine längliche Haupterstreckung auf. Das dritte Lagerelement 78a bildet eine Führungskontur aus, die vorzugsweise einen Hinterschnitt aufweist. Das dritte Lagerelement 78a ist fest mit der Umhausungseinheit 14a, insbesondere dem Umhausungselement 16a, verbunden. Das dritte Lagerelement 78a ist auf einer Innenseite 32a des Umhausungselements 16a angebunden.

Das zweite Lagerelement 68a ist beweglich mit dem ersten Lagerelement 66a verbunden. Das zweite Lagerelement 68a ist insbesondere entlang der Lagerbahn des ersten Lagerelements 66a linear verschiebbar zu dem ersten Lagerelement 66a gelagert. Das zweite Lagerelement 68a weist mehrere Drehlager 80a auf, über die das zweite Lagerelement 68a verschiebbar zu dem ersten Lagerelement 66a gelagert ist. Die Drehlager 80a sind insbesondere an dem ersten Anbindungsbereich 72a des Grundkörpers 70a angebunden. Die Drehlager 80a sind insbesondere in der Führungskontur des ersten Lagerelements 66a angeordnet. In einem Normalbetriebszustand ist das Lagermodul 28a dazu vorgesehen, die Türeinheit 22a über das erste Lagerelement 66a und das zweite Lagerelement 68a beweglich zu lagern. In dem Normalbetriebszustand wird eine Verstellung zwischen der geschlossenen und der geöffneten Stellung der Türeinheit 22a durch eine Relativbewegung des zweiten Lagerelements 68a und des ersten Lagerelements 66a hervorgerufen.

Das zweite Lagerelement 68a ist beweglich mit dem dritten Lagerelement 78a verbunden. Das zweite Lagerelement 68a ist insbesondere entlang der Lagerbahn des dritten Lagerelements 78a linear verschiebbar zur dem dritten Lagerelement 78a gelagert. Das zweite Lagerelement 68a weist mehrere Drehlager 82a auf, über die das zweite Lagerelement 68a verschiebbar zu dem dritten Lagerelement 78a gelagert ist. Die Drehlager 82a sind als drehbar an dem Grundkörper 36a des zweiten Lagerelements 34a befestigte Rollenelemente ausgebildet. Die Drehlager 82a sind insbesondere an dem zweiten Anbindungsbereich 72a des Grundkörpers 70a angebunden. Der zweite Anbindungsbereich 74a ist zur Anbindung des dritten Lagerelements 78a vorgesehen.

Das dritte Lagerelement 78a ist in einem von einem Normalbetriebszustand unterschiedlichen Betriebszustand dazu vorgesehen, das zweite Lagerelement 68a beweglich zu lagern. In dem von einem Normalbetriebszustand unterschiedlichen Betriebszustand ist das Lagermodul 28a dazu vorgesehen, die Türeinheit 22a über das dritte Lagerelement 78a und das zweite Lagerelement 68a beweglich zu lagern. Das zweite Lagerelement 68a ist dazu vorgesehen, in einem Normalbetriebszustand positionssicher an dem dritten Lagerelement 78a fixiert zu sein. Das zweite Lagerelement 68a ist insbesondere dazu vorgesehen, in einem Normalbetriebszustand positionssicher an dem Umhausungselement 16a der Umhausungseinheit 14a fixiert zu sein. Durch die Fixierung des zweiten Lagerelements 68a zu dem dritten Lagerelement 78a wird eine Relativbewegung des zweiten Lagerelements 68a zu dem dritten Lagerelement 78a verhindert. Durch die Fixierung des zweiten Lagerelements 68a zu dem dritten Lagerelement 78a wird insbesondere ein Verschieben der Türeinheit 22a über das zweite Lagerelement 68a und das dritte Lagerelement 78a verhindert.

Zur Fixierung des zweiten Lagerelements 68a zu dem dritten Lagerelement 78a weist das Lagermodul 28a eine Verriegelungseinheit 84a auf. Die Verriegelungseinheit 84a ist dazu vorgesehen, das zweite Lagerelement 68a in einem Normalbetriebszustand positionsfest mit dem dritten Lagerelement 78a zu koppeln. Die Verriegelungseinheit 84a ist dazu vorgesehen, das zweite Lagerelement 68a in einem Verriegelungszustand kraft- und formschlüssig zu verriegeln. Zur Verriegelung des zweiten Lagerelements 68a weist die Verriegelungseinheit 84a ein fest mit dem Umhausungselement 16a verbundenes Verriegelungselement 86a auf. Das Verriegelungselement 86a ist dazu vorgesehen, bei einer definierten Kraft die Verriegelungseinheit 84a zu entkoppeln. Die Verriegelungseinheit 84a umfasst ein Halteelement 88a. Das Halteelement 88a ist zu einer Verriegelung dazu vorgesehen, mit dem Verriegelungselement 86a kraft- und/oder formschlüssig verbunden zu werden. Das Halteelement 88a ist an dem zweiten Lagerelement 68a angebracht. Vorzugsweise ist das Halteelement 88a einstückig mit dem zweiten Lagerelement 68a ausgebildet. Das Halteelement 88a bildet eine Haltekontur 90a aus. Die Haltekontur 90a ist korrespondierend zu dem Verriegelungselement 86a ausgebildet. Die Haltekontur 90a ist vorzugsweise als eine Vertiefung ausgebildet.

Eine Funktion des zweiten Lagermoduls 28a in einem von einem Normalbetriebszustand unterschiedlichen Betriebszustand, in dem die Lagerung über das erste und zweite Lagerelement 66a, 68a nicht möglich ist, erfolgt analog zu der Funktion des ersten Lagermoduls 26a und soll deshalb hier nicht näher beschrieben werden. Grundsätzlich wäre es auch denkbar, dass die Lagervorrichtung 24a anstatt des zweiten Lagermoduls 28a lediglich eine einfache Führung der Türeinheit 22a in dem unteren Bereich des Umhausungselements 16a aufweist. Grundsätzlich wäre es auch denkbar, dass das erste Lagermodul 26a gleich ausgebildet ist wie das zweite Lagermodul 28a. Grundsätzlich wäre es auch denkbar, dass das zweite Lagermodul 28a gleich ausgebildet ist, wie das erste Lagermodul 26a.

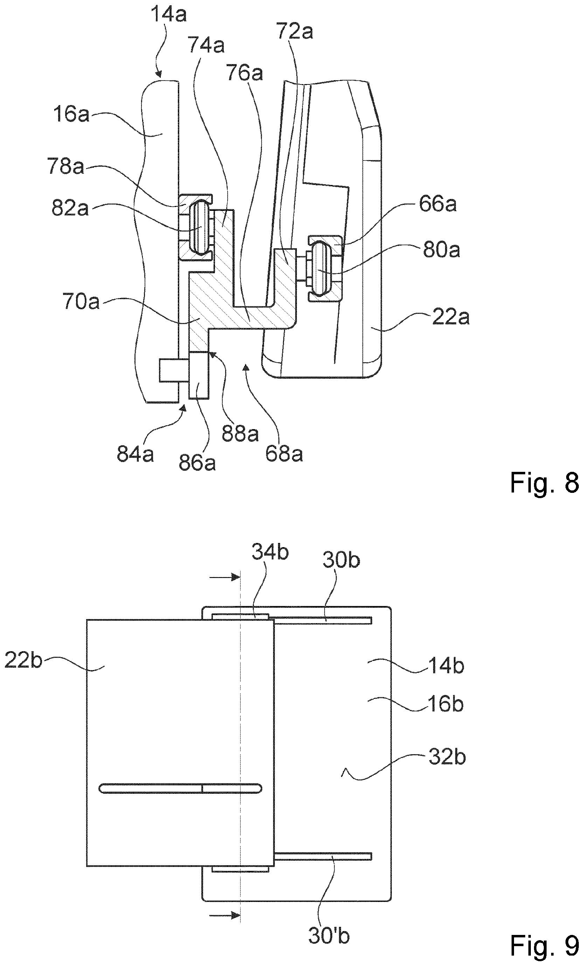

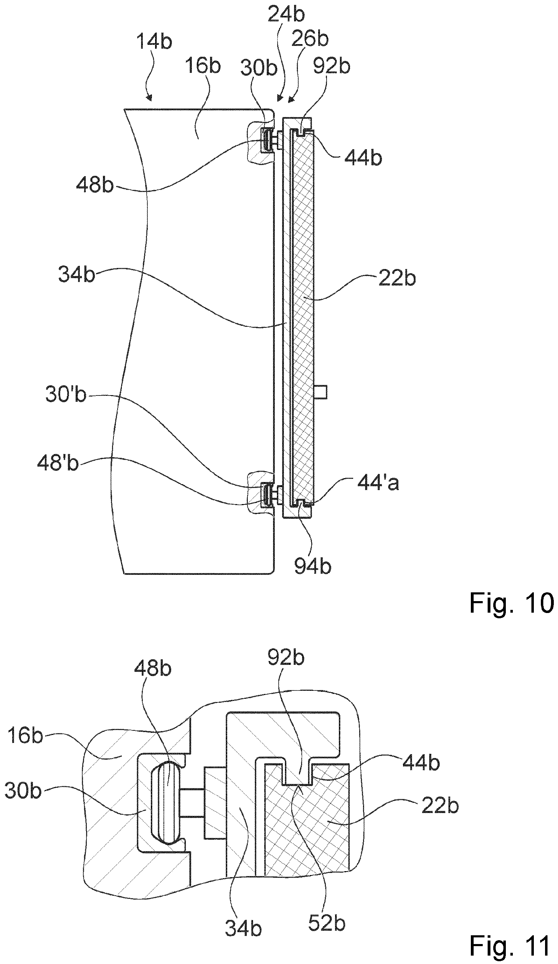

In den Figuren 9 bis 16 sind vier weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 8, verwiesen werden kann. Zur Unterscheidung der Ausführungsbeispiele ist der Buchstabe a den Bezugszeichen des Ausführungsbeispiels in Fig. 1 bis 8 nachgestellt. In den Ausführungsbeispielen der Fig. 9 bis 16 ist der Buchstabe a durch die Buchstaben b und e ersetzt.

In den Figuren 9 bis 11 ist ein zweites Ausführungsbeispiel des Flugzeugsitzmoduls gezeigt. Das Flugzeugsitzmodul ist als ein Teil einer Innenausstattung einer Flugzeugkabine ausgebildet. In einer Flugzeugkabine sind vorzugsweise mehrere Flugzeugsitzmodule angeordnet. Das Flugzeugsitzmodul bildet einen Fluggastsitzbereich aus. Der Fluggastsitzbereich ist als ein Bereich ausgebildet, den insbesondere ein Passagier während eines Fluges für sich zur Verfügung hat. Das Flugzeugsitzmodul weist eine Umhausungseinheit 14b auf. Die Umhausungseinheit 14b ist dazu vorgesehen, den Fluggastsitzbereich zumindest teilweise von einem Rest der Flugzeugkabine abzutrennen. Die Umhausungseinheit 14b weist ein Umhausungselement 16b auf. Das Umhausungselement 16b umgibt den Fluggastsitzbereich 10b zumindest teilweise. Das Flugzeugmodul umfasst eine Türeinheit 22b. Die Türeinheit 22b ist dazu vorgesehen, zumindest in einem Betriebszustand den Fluggastsitzbereich zumindest teilweise von einem angrenzenden Kabinenbereich, insbesondere einem Gangbereich, abzugrenzen. Die Türeinheit 22b ist dazu vorgesehen, einen Durchgangsbereich in einem geschlossenen Zustand zu verschließen.

Das Flugzeugsitzmodul weist zur Lagerung der Türeinheit 22b eine Lagervorrichtung 24b auf. Die Lagervorrichtung 24b ist dazu vorgesehen, die Türeinheit 22b beweglich an der Umhausungseinheit 14b zu lagern. Die Türeinheit 22b ist über die Lagervorrichtung 24b an das Umhausungselement 16b angebunden. Mittels der Lagervorrichtung 24b ist die Türeinheit 22b zwischen dem geöffneten Zustand und dem geschlossenen Zustand verstellbar. Die Lagervorrichtung 24b ist vorzugsweise als eine Linearlagervorrichtung ausgebildet. Mittels der als Linearlagervorrichtung ausgebildeten Lagervorrichtung 24b ist die Türeinheit 22b linear zwischen einer geschlossenen Stellung und einer geöffneten Stellung verschiebbar.

Die Lagervorrichtung 24b weist ein Lagermodul 26b auf. Das Lagermodul 26b weist zwei erste Lagerelemente 30b, 30'b auf. Die Lagerelemente 30b, 30'b sind jeweils als eine Führungsschiene ausgebildet, insbesondere als eine Primärführungsschiene. Die ersten Lagerelemente 30b, 30'b bilden jeweils eine Führungskontur aus, die vorzugsweise einen Hinterschnitt aufweist. Die als Führungsschiene ausgebildeten ersten Lagerelemente 30b, 30'b weisen eine längliche Haupterstreckung auf. Die ersten Lagerelemente 30b, 30'b bilden eine Lagerbahn aus, entlang der Elemente relativ zu dem Lagerelement 30b, 30'b bewegbar, insbesondere axial verschiebbar, gelagert werden können. Die ersten Lagerelemente 30b, 30'b sind fest mit der Umhausungseinheit 14b verbunden. Die ersten Lagerelemente 30b, 30'b sind insbesondere fest mit dem Umhausungselement 16b verbunden. Das erste Lagerelement 30b der ersten Lagerelemente 30b, 30'b sind auf einer Innenseite 32b des Umhausungselements 16b angebunden. Das eine Lagerelement 30b ist insbesondere in einem oberen Bereich des Umhausungselements 16b angeordnet. Das andere erste Lagerelement 30'b ist in einem unteren Bereich des Umhausungselements 16b angeordnet.

Das erste Lagermodul 26b umfasst ein zweites Lagerelement 34b. Das zweite Lagerelement 34b ist als ein Zwischenelement ausgebildet. Das zweite Lagerelement 34b ist als ein Führungsschlitten ausgebildet. Das zweite Lagerelement 34b ist als ein Rahmenelement ausgebildet. Das zweite Lagerelement 34b ist dazu vorgesehen, die Türeinheit 22b zumindest in einem Teilbereich, zumindest teilweise zu umgreifen. Das zweite Lagerelement 34b weist eine Höhenerstreckung auf, die größer ist als eine Höhenerstreckung der Türeinheit 22b. Das zweite Lagerelement 34b umgreift die Türeinheit 22b an einem oberen Ende und an einem unteren Ende.

Das Lagermodul 26b umfasst zwei dritte Lagerelemente 44b, 44'b. Die dritten Lagerelemente 44b, 44'b sind als Führungsschienen ausgebildet. Die dritten Lagerelemente 44b, 44'b sind insbesondere als eine Sekundärführungsschiene ausgebildet. Die als Führungsschienen ausgebildeten dritten Lagerelemente 44b, 44'b weisen eine längliche Haupterstreckung auf. Die dritten Lagerelemente 44b, 44'b bilden eine Führungskontur aus. Die dritten Lagerelemente 44b, 44'b sind jeweils an der Unterseite bzw. der Unterseite der Türeinheit 22b angeordnet. Die dritten Lagerelemente 44b, 44'b sind fest mit der Türeinheit 22b verbunden. Vorzugsweise sind die dritten Lagerelemente 44b, 44'b einstückig mit der Türeinheit 22b ausgebildet. Das eine dritte Lagerelement 44b ist in eine Oberseite der Türeinheit 22b eingebracht. Das andere dritte Lagerelement 44'b ist in eine Unterseite der Türeinheit 22b eingebracht. Die dritten Lagerelemente 44b, 44'b bilden jeweils eine Lagerbahn aus, entlang der Elemente relativ zu dem dritten Lagerelement 44b bewegbar, insbesondere axial verschiebbar, gelagert werden können.

Das zweite Lagerelement 34b ist beweglich mit dem ersten Lagerelement 30b verbunden. Das zweite Lagerelement 34b ist insbesondere entlang der Lagerbahn des ersten Lagerelements 30b linear verschiebbar zur dem ersten Lagerelement 30b gelagert. Das zweite Lagerelement 34b weist mehrere Drehlager 48b, 48'b auf, über die das zweite Lagerelement 34b verschiebbar zu den beiden ersten Lagerelementen 30b, 30'b gelagert ist. Die Drehlager 48b, 48'b sind als drehbar an dem zweiten Lagerelement 34b befestigte Rollenelemente ausgebildet. Die Drehlager 48b, 48'b sind insbesondere in der Führungskontur der ersten Lagerelemente 30b, 30'b angeordnet. Die Drehlager 48b, 48'b sind dazu vorgesehen, zur verschiebbaren Lagerung der Türeinheit 22b in den Führungskonturen der ersten Lagerelemente 30b, 30'b anzurollen. In einem Normalbetriebszustand ist das Lagermodul 26b dazu vorgesehen, die Türeinheit 22b über das erste Lagerelement 30b und das zweite Lagerelement 34b beweglich zu lagern. Die Türeinheit 22b ist in dem Normalbetriebszustand positionsfest mit dem zweiten Lagerelement 34b verbunden. In dem Normalbetriebszustand wird die Türeinheit 22b zusammen mit dem zweiten Lagerelement 34b relativ zu den ersten Lagerelementen 30b, 30'b verschoben und so zwischen seiner geschlossenen und geöffneten Stellung verschoben.

Das zweite Lagerelement 34b ist beweglich mit den dritten Lagerelementen 44b, 44'b verbunden. Das zweite Lagerelement 34b ist insbesondere entlang der Lagerbahnen der dritten Lagerelemente 44b, 44'b linear verschiebbar zur den dritten Lagerelementen 44b, 44'b, also insbesondere zu der Türeinheit 22bgelagert. Das zweite Lagerelement 34b ist über die fest mit der Türeinheit 22b verbundenen oder von der Türeinheit 22b ausgebildeten dritten Lagerelemente 44b, 44'b verschiebbar mit der Türeinheit 22b gekoppelt. Das zweite Lagerelement 34b weist zwei Führungselemente 92b, 94b auf. Die Führungselemente 92b, 94b sind dazu vorgesehen, in die zwei dritten Lagerelemente 44b, 44' einzugreifen. Die Führungselemente 92b, 94b sind jeweils in einem oberen bzw. unteren Bereich des zweiten Lagerelements 34b angeordnet, in dem das zweite Lagerelement 34b die Türeinheit 22b umgreift. Die Führungselemente 92b, 94b sind jeweils auf einer Innenseite des zweiten Lagerelements 34b angebracht und erstrecken sich nach innen. Die Führungselemente 92b, 94b ragen in einem montierten Zustand jeweils in das angrenzende dritte Lagerelement 44b, 44'b. Die Führungselemente 92b, 94b sind über eine Gleitlagerung in dem jeweiligen dritten Lagerelement 44b, 44'b gelagert. Das zweite Lagerelement 34b ist dazu vorgesehen, in einem Normalbetriebszustand positionssicher an den dritten Lagerelementen 44b, 44'b fixiert zu sein. Durch die Fixierung des zweiten Lagerelements 34b zu den dritten Lagerelementen 44b, 44'b wird eine Relativbewegung des zweiten Lagerelements 34b zu den dritten Lagerelementen 44b, 44'b, also insbesondere auch zu der Türeinheit 22b verhindert. Durch die Fixierung des zweiten Lagerelements 34b zu den dritten Lagerelementen 44b, 44'b wird insbesondere ein Verschieben der Türeinheit 22b über das zweite Lagerelement 34b und die dritten Lagerelemente 44b, 44' verhindert. Durch die Fixierung des zweiten Lagerelements 34b zu den dritten Lagerelementen 44b, 44'b wird eine bewegliche Lagerung der Türeinheit 22b lediglich mittels des ersten Lagerelements 30b und des zweiten Lagerelements 34b durchgeführt. Grundsätzlich wäre es ebenso denkbar, dass die dritten Lagerelemente 44b, 44'b auch in einer Rückseite der Türeinheit 22b eingebracht sind. Ebenso ist es denkbar, dass die Führungselemente 92b, 94b mehrere drehbar gelagerte Rollenelemente aufweisen, die in den dritten Lagerelementen 44b, 44'b verschiebbar angeordnet sind.

Zur Fixierung des zweiten Lagerelements 34b zu dem dritten Lagerelement 44b weist das Lagermodul 26b eine Verriegelungseinheit 52b auf. Die Verriegelungseinheit 52b ist insbesondere als eine Reibschluss-Verriegelungseinheit ausgebildet. Die Verriegelungseinheit 52b ist dazu vorgesehen, durch einen Reibschluss zwischen den Führungselementen 92b, 94b und den Lagerelementen 44b, 44'b zu verriegeln. Bis zu einer definierten Querkraft zwischen den Führungselementen 92b, 94b und den Lagerelementen 44b, 44'b ist die Verriegelungseinheit 52b verriegelt. Bei einer definierten Querkraft, die als Überlast bezeichnet wird, wird die Haftreibung zwischen den Führungselementen 92b, 94b und den Lagerelementen 44b, 44'b überwunden und die Führungselemente 92b, 94b können in den Lagerelementen 44b, 44'b axial verschoben werden. Dadurch kann die Türeinheit 22b relativ zu dem zweiten Lagerelement 34b axial verschoben werden. Grundsätzlich ist es auch denkbar, dass die Verriegelungseinheit 52b äquivalent zu der Verriegelungseinheit des ersten Ausführungsbeispiels ausgebildet ist.

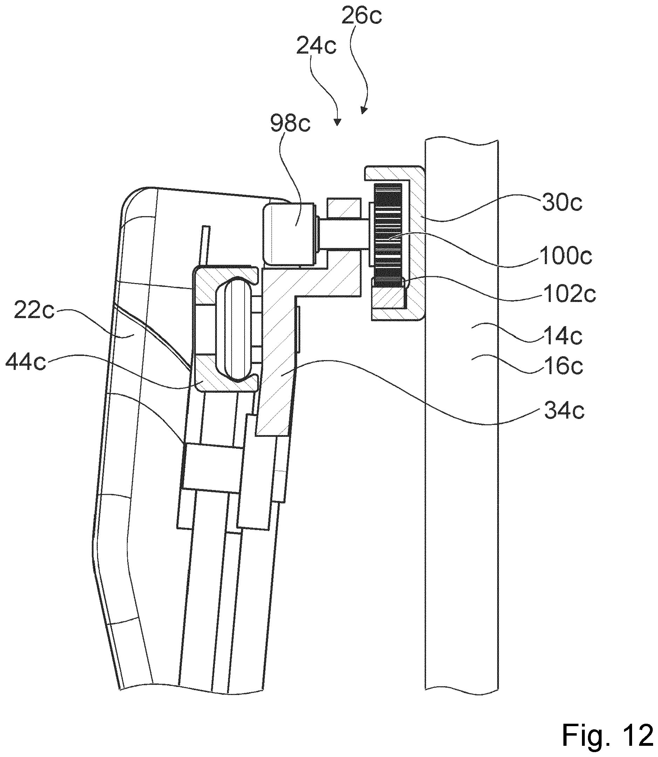

In der Figuren 12 ist ein drittes Ausführungsbeispiel des Flugzeugsitzmoduls gezeigt. Das Flugzeugsitzmodul ist als ein Teil einer Innenausstattung einer Flugzeugkabine ausgebildet. Das Flugzeugsitzmodul weist eine Umhausungseinheit 14c auf. Die Umhausungseinheit 14c ist dazu vorgesehen, den Fluggastsitzbereich zumindest teilweise von einem Rest der Flugzeugkabine abzutrennen. Die Umhausungseinheit 14c weist ein Umhausungselement 16c auf. Das Flugzeugmodul umfasst eine Türeinheit 22c. Die Türeinheit 22c ist dazu vorgesehen, zumindest in einem Betriebszustand den Fluggastsitzbereich zumindest teilweise von einem angrenzenden Kabinenbereich, insbesondere einem Gangbereich, abzugrenzen.

Das Flugzeugsitzmodul weist zur Lagerung der Türeinheit 22c eine Lagervorrichtung 24c auf. Die Lagervorrichtung 24c ist dazu vorgesehen, die Türeinheit 22b beweglich an der Umhausungseinheit 14c zu lagern. Die Lagervorrichtung 24c weist ein erstes Lagermodul 26c auf. Das erste Lagermodul 26c umfasst ein erstes Lagerelement 30c. Das erste Lagerelement 30c ist als eine Führungsschiene ausgebildet, insbesondere als eine Primärführungsschiene. Das erste, als Führungsschiene ausgebildete Lagerelement 30c ist an dem Umhausungselement 16c angebunden. Das erste Lagermodul 26c umfasst ein zweites Lagerelement 34c. Das zweite Lagerelement 34c ist als ein Zwischenelement ausgebildet. Das erste Lagermodul 26c umfasst ein drittes Lagerelement 44c. Das dritte Lagerelement 44c ist als eine Führungsschiene ausgebildet. Das dritte Lagerelement 44c ist insbesondere als eine Sekundärführungsschiene ausgebildet. Das dritte Lagerelement 44c ist an der Türeinheit 22c angebunden. Im Wesentlichen ist das erste Lagermodul 26c gleich ausgebildet wie das erste Lagermodul 26c des ersten Ausführungsbeispiels. Im Unterschied zu dem ersten Ausführungsbeispiel ist die Türeinheit 22c hier elektrisch betrieben, insbesondere verstellbar. Die Lagervorrichtung 24c umfasst zur elektrischen Verstellung der Türeinheit 22c einen Elektromotor 98c. Der Elektromotor 98c ist in das erste Lagermodul 26c integriert. Der Elektromotor 98c ist an dem als Zwischenelement ausgebildeten zweiten Lagerelement 34c angebunden. Die Lagervorrichtung 24c umfasst ein Zahnradelement 100c, das von dem Elektromotor 98c antreibbar ist. Das Zahnradelement 100c ist über eine Welle drehfest mit dem Elektromotor 98c gekoppelt.

Das erste Lagerelement 30c umfasst im Gegensatz zu dem ersten Ausführungsbeispiel eine Zahnstange 102c. Das von dem Elektromotor 98c angetriebene Zahnradelement 100c ist in der Zahnstange 102c geführt. Durch Betreiben des Elektromotors 98c in unterschiedliche Drehrichtungen kann die Türeinheit 22c geöffnet oder geschlossen werden. Die Lagervorrichtung 24c umfasst eine nicht näher dargestellte Elektronik, die zur Ansteuerung des Elektromotors 98c vorgesehen ist. Über die Elektronik kann ein Passagier über eine nicht näher dargestellte Bedieneinheit den Elektromotor 98c ansteuern und dadurch die Türeinheit 22c wahlweise öffnen oder schließen.

Wie die vorhergehenden Ausführungsbeispiele auch, weist das Lagermodul 26c zur Fixierung des zweiten Lagerelements 34c zu dem dritten Lagerelement 44c in einem Normalbetriebszustand eine Verriegelungseinheit 52c auf. Die Verriegelungseinheit 52c kann dabei insbesondere gleich ausgebildet sein, wie in einem der vorhergehenden Ausführungsbeispiele. In einer Betriebssituation, in der beispielsweise die Elektronik ausfällt, der Elektromotor 98 defekt ist oder das Zahnradelement 100c in der Zahnstange 102 klemmt, kann die Türeinheit 22c nicht mehr mittels des Elektromotors 98c über das erste und zweite Lagerelement 30c, 34c verstellt werden. Durch Entriegeln der Verriegelungseinheit 52c kann, wie in den vorhergehenden Ausführungsbeispielen, in dem vom Normalbetriebszustand unterschiedlichen Betriebszustand die Türeinheit 22c über das zweite Lagerelement 34c und das dritte Lagerelement 44c verstellt, also zwischen der geschlossenen und geöffneten Stellung verschoben, werden.

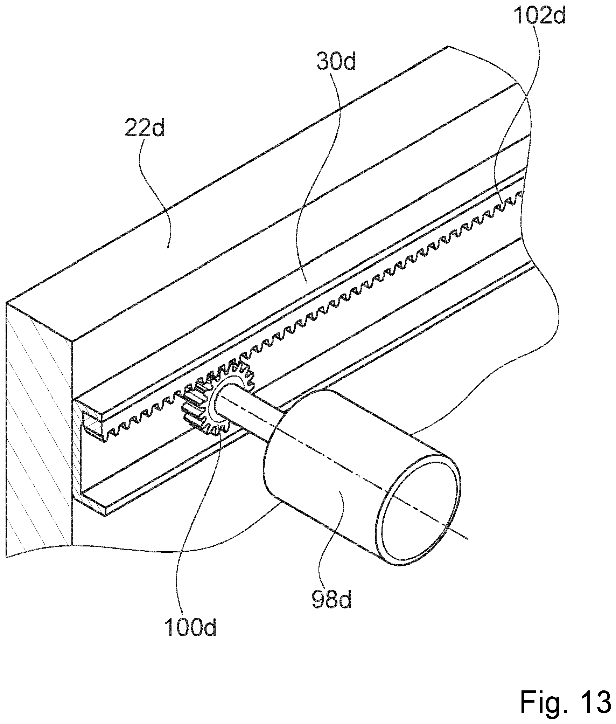

In der Figuren 13 ist ein viertes Ausführungsbeispiel des Flugzeugsitzmoduls gezeigt. Das Flugzeugsitzmodul ist als ein Teil einer Innenausstattung einer Flugzeugkabine ausgebildet. Das Flugzeugsitzmodul weist eine Umhausungseinheit auf. Die Umhausungseinheit 14d weist ein Umhausungselement 16d auf. Das Flugzeugmodul umfasst eine Türeinheit 22d. Die Türeinheit 22d ist dazu vorgesehen, zumindest in einem Betriebszustand den Fluggastsitzbereich zumindest teilweise von einem angrenzenden Kabinenbereich, insbesondere einem Gangbereich, abzugrenzen.

Das Flugzeugsitzmodul weist zur Lagerung der Türeinheit 22d eine Lagervorrichtung 24d auf. Die Lagervorrichtung 24d ist dazu vorgesehen, die Türeinheit 22b beweglich an der Umhausungseinheit zu lagern. Die Lagervorrichtung 24d weist ein erstes Lagermodul 26d auf. Das erste Lagermodul 26d umfasst ein erstes Lagerelement 30d. Das erste Lagerelement 30d ist als eine Führungsschiene ausgebildet, insbesondere als eine Primärführungsschiene. Das erste, als Führungsschiene ausgebildete Lagerelement 30d ist im Unterschied zu dem dritten Ausführungsbeispiel der Figur 12 an der Türeinheit 22d angebunden. Das erste Lagermodul 26d umfasst ein zweites Lagerelement 34d. Das zweite Lagerelement 34d ist als ein Zwischenelement ausgebildet. Das erste Lagermodul 26d umfasst ein drittes Lagerelement. Das dritte Lagerelement 44d ist als eine Führungsschiene ausgebildet. Das dritte Lagerelement ist insbesondere als eine Sekundärführungsschiene ausgebildet. Das dritte Lagerelement ist an dem Umhausungselement angebunden.

Die Lagervorrichtung 24d umfasst zur elektrischen Verstellung der Türeinheit 22d einen Elektromotor 98d. Der Elektromotor 98d ist in das erste Lagermodul 26d integriert. Der Elektromotor 98d ist an dem als Zwischenelement ausgebildeten zweiten Lagerelement 34d angebunden. Die Lagervorrichtung 24d umfasst ein Zahnradelement 100d, das von dem Elektromotor 98d antreibbar ist. Das erste Lagerelement 30d umfasst im Gegensatz zu dem ersten Ausführungsbeispiel eine Zahnstange 102d. Im Unterschied zu dem dritten Ausführungsbeispiel ist die Zahnstange 102d an dem an der Türeinheit 22d angebundenen Lagerelement 30d angebracht. Das von dem Elektromotor 98d angetriebene Zahnradelement 100d ist in der Zahnstange 102d geführt. Eine Grundsätzliche Funktion der Lagervorrichtung 24d entspricht der des dritten Ausführungsbeispiels der Figur 12.

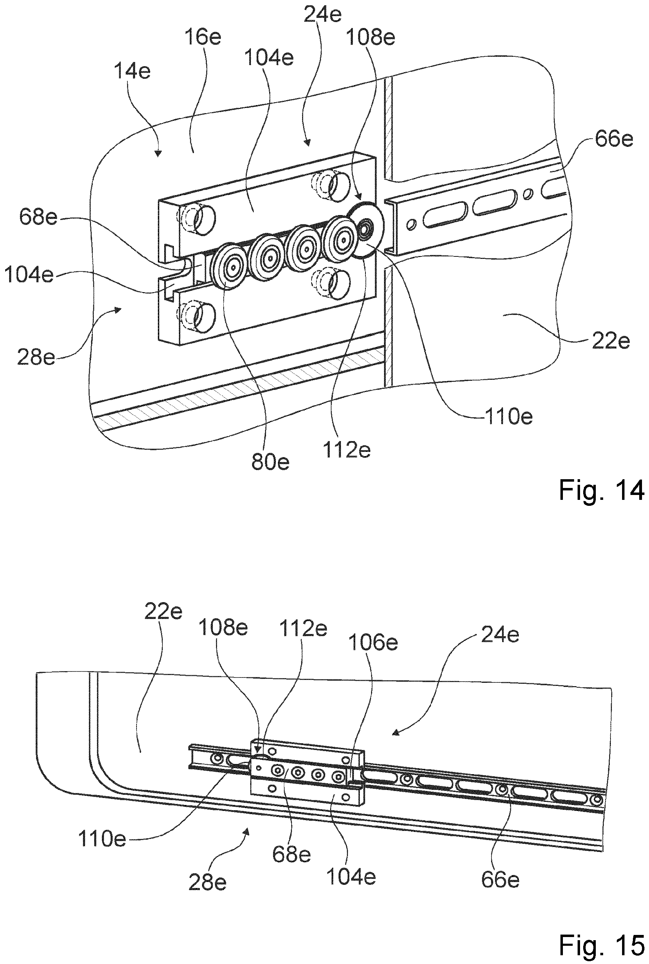

In den Figuren 14 bis 16 ist ein fünftes Ausführungsbeispiel des Flugzeugsitzmoduls gezeigt. Das Flugzeugsitzmodul ist als ein Teil einer Innenausstattung einer Flugzeugkabine ausgebildet. Das Flugzeugsitzmodul bildet einen Fluggastsitzbereich 10e aus. Das Flugzeugsitzmodul weist eine Umhausungseinheit 14e auf. Die Umhausungseinheit 14e weist ein Umhausungselement 16e auf. Die Umhausungseinheit 14e bildet einen Durchgangsbereich 18e aus. Der Durchgangsbereich 18e verbindet den Fluggastsitzbereich 10e und den angrenzenden Gangbereich 20e der Flugzeugkabine. Das Flugzeugsitzmodul umfasst eine Türeinheit 22e. Die Türeinheit 22e ist dazu vorgesehen, zumindest in einem Betriebszustand den Fluggastsitzbereich 10e zumindest teilweise von einem angrenzenden Kabinenbereich, insbesondere einem Gangbereich, abzugrenzen. Die Türeinheit 22e und die Umhausungseinheit 14e können vorzugsweise gleich ausgebildet sein wie in den vorhergehenden Ausführungsbeispielen.

Das Flugzeugsitzmodul weist zur Lagerung der Türeinheit 22e eine Lagervorrichtung 24e auf. Die Lagervorrichtung 24e ist dazu vorgesehen, die Türeinheit 22e beweglich an der Umhausungseinheit 14e zu lagern. Die Türeinheit 22e ist über die Lagervorrichtung 24e an das Umhausungselement 16e angebunden. Mittels der Lagervorrichtung 24e ist die Türeinheit 22e zwischen dem geöffneten Zustand und dem geschlossenen Zustand verstellbar. Die Lagervorrichtung 24e ist vorzugsweise als eine Linearlagervorrichtung ausgebildet. Mittels der als Linearlagervorrichtung ausgebildeten Lagervorrichtung 24e ist die Türeinheit 22e linear zwischen einer geschlossenen Stellung und einer geöffneten Stellung verschiebbar. Die Lagervorrichtung 24e weist ein nicht näher dargestelltes erstes Lagermodul auf. Das erste Lagermodul ist dazu vorgesehen, die Türeinheit 22e in einem oberen Bereich zu lagern. Das erste Lagermodul zur Lagerung der Türeinheit 22e in dem oberen Bereich kann vorzugsweise äquivalent zu einem der vorhergehenden Ausführungsbeispiele der Figuren 1 bis 13 ausgebildet sein.

Die Lagervorrichtung 24e weist ein zweites Lagermodul 28e auf. Das zweite Lagermodul 28a ist dazu vorgesehen, die Türeinheit 22e in einem unteren Bereich zu lagern. Das zweite Lagermodul 28e ist in einem unteren Bereich der Türeinheit 22e angeordnet. Durch das obere Lagermodul und das untere Lagermodul 28e, die an zwei gegenüberliegenden Bereichen der Türeinheit 22e angeordnet sind, kann eine besonders gleichmäßige Lagerung der Türeinheit 22e erreicht werden. Im Unterschied zu den vorhergehenden Ausführungsbeispielen ist das zweite Lagermodul 28a vorzugsweise wesentlich unterschiedlich zu dem ersten Lagermodul der Lagervorrichtung 24e ausgebildet. Das zweite Lagermodul 28a ist dazu vorgesehen, in einem Normalbetriebszustand die Türeinheit 22e geführt zu dem Umhausungselement 16e zu lagern. Mittels des zweiten Lagermoduls 28e ist die Türeinheit 22e in einem Normalbetriebszustand in ihrem unteren Bereich verschiebbar zu dem Umhausungselement 16e gelagert.

Das zweite Lagermodul 28e umfasst ein erstes Lagerelement 66e. Das erste Lagerelement 66e ist als eine Führungsschiene ausgebildet, insbesondere als eine Primärführungsschiene. Das erste Lagerelement 66e bildet eine Führungskontur aus, die vorzugsweise einen Hinterschnitt aufweist. Das als Führungsschiene ausgebildete erste Lagerelement 66e weist eine längliche Haupterstreckung auf. Das erste Lagerelement 66e bildet eine Lagerbahn aus, entlang der Elemente relativ zu dem Lagerelement 66e bewegbar, insbesondere axial verschiebbar, gelagert werden können. Das erste Lagerelement 66e ist fest mit der Türeinheit 22e verbunden. Das erste Lagerelement 66e ist insbesondere fest mit einer Innenseite der Türeinheit 22e verbunden. Vorzugsweise ist das erste Lagerelement 66e mittels Schraubenverbindungen fest mit der Türeinheit 22e verbunden. Grundsätzlich ist es auch denkbar, dass das erste Lagerelement 66e beispielsweise über eine Klebe- oder Clipverbindung fest und positionssicher mit der Türeinheit 22e verbunden ist. Das erste Lagerelement 66e des zweiten Lagermoduls 28e ist in einem unteren Bereich der Türeinheit 22e angeordnet. Das erste Lagerelement 66e ist vorzugsweise in dem einem Kabinenboden zugewandten Bereich der Türeinheit 22e angeordnet.

Das zweite Lagermodul 28e umfasst ein zweites Lagerelement 68e. Das zweite Lagerelement 68e ist als ein Zwischenelement ausgebildet. Das zweite Lagerelement 68e ist vorzugsweise insbesondere als ein Lagerschlitten ausgebildet. Das zweite Lagerelement 68e weist einen Grundkörper 70e auf. Der Grundkörper 70e weist eine längliche Erstreckung auf. Der Grundkörper 70e ist vorzugsweise plattenförmig ausgebildet. Der Grundkörper 70e des zweiten Lagerelements 68e ist vorzugsweise als ein Flachstab ausgebildet. In einem montierten Zustand ist das zweite Lagerelement 68e mit einer flachen Seite dem ersten Lagerelement 66e zugewandt. Die dem ersten Lagerelement 66e zugewandte Seite des Grundkörpers 70e ist als ein Anbindungsbereich 72e ausgebildet. Das zweite Lagerelement 68e ist beweglich mit dem ersten Lagerelement 66e verbunden. Das zweite Lagerelement 68e ist insbesondere entlang der Lagerbahn des ersten Lagerelements 66e linear verschiebbar zu dem ersten Lagerelement 66e gelagert. Das zweite Lagerelement 68e weist mehrere Drehlager 80e auf, über die das zweite Lagerelement 68e verschiebbar zu dem ersten Lagerelement 66e gelagert ist. Die Drehlager 80e sind vorzugsweise an dem ersten Anbindungsbereich 72e des Grundkörpers 70e angebunden. Die Drehlager 80e sind vorzugsweise über in dem Grundkörper 70e des zweiten Lagerelements 68e eingebrachte Durchgangslöcher mittels Schraubenverbindungen an dem zweiten Lagerelement 68e befestigt. Die Drehlager 80e sind vorzugsweise in der Führungskontur des ersten Lagerelements 66e angeordnet. In einem Normalbetriebszustand ist das Lagermodul 28e dazu vorgesehen, die Türeinheit 22e in dem unteren Bereich über das erste Lagerelement 66e und das zweite Lagerelement 68e beweglich zu lagern. In dem Normalbetriebszustand wird eine Verstellung zwischen der geschlossenen und der geöffneten Stellung der Türeinheit 22e durch eine Relativbewegung des zweiten Lagerelements 68e und des ersten Lagerelements 66e hervorgerufen.

Das zweite Lagermodul 28e weist ein Anbindungselement 104e auf. Das Anbindungselement 104e ist zur Anbindung des zweiten Lagerelements 68e vorgesehen. Das Anbindungselement 104e ist dazu vorgesehen, das zweite Lagerelement 68e in einem Normalbetriebszustand an die Umhausungseinheit 14e anzubinden. Vorzugsweise ist das Anbindungselement 104e dazu vorgesehen, das zweite Lagerelement 68e in einem Normalbetriebszustand an das Umhausungselement 16e anzubinden. Mittels des Anbindungselements 104e ist das zweite Lagerelement 68e mit dem Umhausungselement 16e positionsfest koppelbar. Das Anbindungselement 104e ist fest mit dem Umhausungselement 16e verbunden. Vorzugsweise ist das Anbindungselement 104e mittels einer Schraubenverbindung fest mit dem Umhausungselement 16e verbunden. Grundsätzlich ist es auch denkbar, dass das Anbindungselement 104e mittels einer anderen Verbindungsmethode, beispielsweise durch eine Klebeverbindung, positionsfest mit dem Umhausungselement 16e verbunden ist. Grundsätzlich ist es ebenso denkbar, dass das Anbindungselement 104e einstückig mit dem Umhausungselement 16e ausgebildet ist. Das Anbindungselement 104e ist auf einer Außenseite des Umhausungselements 16e angebracht. Das Anbindungselement 104e ist in einem unteren Bereich des Umhausungselements 16e angebunden. Das zweite Lagerelement 68e ist in einem Normalbetriebszustand positionsfest mit dem Anbindungselement 104e gekoppelt. Das zweite Lagerelement 68e ist in dem Normalbetriebszustand positionsfest mit dem Umhausungselement 16e gekoppelt. In einem von dem Normalbetriebszustand unterschiedlichen Betriebszustand ist das zweite Lagerelement 68e dazu vorgesehen, von dem Anbindungselement 104e entkoppelt zu werden. Das zweite Lagerelement 68e ist in einem vom Normalbetriebszustand unterschiedlichen Betriebszustand von dem Anbindungselement 104e getrennt. Das mit dem Umhausungselement 16e verbundene Anbindungselement 104e ist in dem vom Normalbetriebszustand unterschiedlichen Betriebszustand zu dem zweiten Lagerelement 68e, das mit dem ersten Lagerelement 66e gekoppelt ist, freischwebend. Die Türeinheit 22e ist mit ihrem unteren Ende in dem vom Normalbetriebszustand unterschiedlichen Betriebszustand zu dem zweiten Lagerelement 68e und damit zu dem Umhausungselement 16e freischwebend. Die Türeinheit 22e ist mit ihrem unteren Ende in dem vom Normalbetriebszustand unterschiedlichen Betriebszustand von dem zweiten Lagerelement 68e und damit von dem Umhausungselement 16e gelöst. Die Türeinheit 22e kann sich mit ihrem unteren Ende in dem vom Normalbetriebszustand unterschiedlichen Betriebszustand in einem definierten Bewegungsbereich dem zweiten Lagerelement 68e und damit zu dem Umhausungselement 16e bewegen. Die Türeinheit 22e kann in dem vom Normalbetriebszustand unterschiedlichen Betriebszustand unabhängig von einer Funktionsweise einer Lagerung zwischen dem ersten Lagerelement 66e und dem zweiten Lagerelement 68e des zweiten Lagermoduls 28e relativ zu dem Umhausungselement 16e bewegt, also axial verschoben werden. Vorzugsweise weist das zweite Lagermodul 28e ein Auffangelement auf, das dazu vorgesehen ist, eine Verschwenkung der Türeinheit 22e in dem unteren Bereich zu begrenzen. Das Auffangelement kann beispielsweise als ein Auffangkäfig ausgebildet sein, das das untere Ende der Türeinheit 22e nach einer Entkopplung an dem Umhausungselement 16e so sichert, dass eine zu große Verschwenkung beispielsweise in einen Gangbereich hinein verhindert werden kann.

Zur Anbindung des zweiten Lagerelements 68e weist das Anbindungselement 104e einen Anbindungsbereich 106e auf. Über den Anbindungsbereich 106e ist das zweite Lagerelement 68e mit dem Anbindungselement 104e koppelbar. Der Anbindungsbereich 106e ist als eine Führungsschiene ausgebildet. Vorzugsweise ist der Anbindungsbereich 106e als eine Gleitschiene ausgebildet. Das zweite Lagerelement 68e ist dazu vorgesehen, in dem Anbindungsbereich 106e des Anbindungselements 104e gelagert zu werden. Der als Gleitschiene ausgebildete Anbindungsbereich 104e ist einstückig von dem Anbindungselement 104e ausgebildet. Der Anbindungsbereich 106e ist als eine Ausnehmung in dem Anbindungselement 104e ausgebildet. Der Anbindungsbereich 106e ist als eine sich in montiertem Zustand in Richtung des ersten Lagerelements 66e geöffnete Ausnehmung ausgebildet. Der Anbindungsbereich 106e bildet an seinen axialen Seitenwänden jeweils einen Hinterschnitt aus, in denen das zweite Lagerelement 68e mit entsprechenden Lagerfortsätzen gleitend gelagert ist. Der Anbindungsbereich 106e erstreckt sich in Axialrichtung des Anbindungselements 104e von einem ersten Ende des Anbindungselements 104e bis an ein gegenüberliegendes zweites Ende.

Zur positionssicheren Fixierung des zweiten Lagerelements 68e an dem Anbindungselement 104e weist das Lagermodul 28e eine Verriegelungseinheit 108e auf. Die Verriegelungseinheit 108e ist dazu vorgesehen, das zweite Lagerelement 68e in einem Normalbetriebszustand positionsfest mit dem Anbindungselement 104e zu koppeln. Die Verriegelungseinheit 108e ist dazu vorgesehen, das zweite Lagerelement 68e in einem Verriegelungszustand kraft- und formschlüssig zu verriegeln. Die Verriegelungseinheit 108e ist dazu vorgesehen, das zweite Lagerelement 68e in einem Verriegelungszustand kraft- und formschlüssig mit dem Anbindungselement 104e zu koppeln. Vorzugsweise ist die Verriegelungseinheit 108e dazu vorgesehen, das zweite Lagerelement 68e mit dem Element, an dem das Anbindungselement 104e angebunden ist, also insbesondere mit der Türeinheit 22e, kraft- und/oder formschlüssig zu verbinden.

Zur Verriegelung des zweiten Lagerelements 68e weist die Verriegelungseinheit 108e ein fest mit dem zweiten Lagerelement 68e verbundenes Verriegelungselement 110e auf. Das Verriegelungselement 110e ist dazu vorgesehen, bei einer definierten Kraft die Verriegelungseinheit 108e zu entkoppeln. Das Verriegelungselement 110e ist dazu vorgesehen, zumindest teilweise elastisch verformt zu werden. Das Verriegelungselement 110e ist insbesondere aus einem elastischen Kunststoff gebildet. Das Verriegelungselement 110e weist vorzugsweise eine runde Form auf. Das Verriegelungselement 110e ist vorzugsweise ringförmig ausgebildet. Das Verriegelungselement 110e ist über ein Befestigungsmittel, wie beispielsweise eine Schraube oder einen Bolzen/Stift, fest mit dem zweiten Lagerelement 68e verbunden. Das Verriegelungselement 110e ist an einem ersten Ende des zweiten Lagerelements 68e angebunden.

Die Verriegelungseinheit 108e umfasst ein Halteelement 112e. Das Halteelement 112e ist zu einer Verriegelung dazu vorgesehen, mit dem Verriegelungselement 110e kraft- und/oder formschlüssig verbunden zu werden. Das Halteelement 112e ist an dem Anbindungselement 104e angebracht. Das Halteelement 112e ist vorzugsweise von dem Anbindungselement 104e ausgebildet. Das Halteelement 112e bildet eine Haltekontur aus. Die Haltekontur ist korrespondierend zu dem Verriegelungselement 110e ausgebildet. Die Haltekontur ist vorzugsweise von Vertiefungen in Seitenwänden des als Gleitschiene ausgebildeten Anbindungsbereichs ausgebildet. Das Halteelement 112e ist an einem ersten Ende des Anbindungselements 104e in den Anbindungsbereich 106e integriert. Das Halteelement 112e ist als eine kreisförmige Haltekontur ausgebildet. Das Halteelement 112e ist als eine kreisförmige Kontur in einer Ebene des Anbindungsbereichs 106e ausgebildet, die einen Durchmesser hat, der größer ist, als eine Breite des Anbindungsbereichs. In einem Normalbetriebszustand ist das Verriegelungselement 110e formschlüssig in dem Halteelement 112e angeordnet. Das Verriegelungselement 110e ist zur Entkopplung dazu vorgesehen, elastisch verformt zu werden. Durch die elastische Verformung des Verriegelungselements 110e durch eine einwirkende Kraft kann das Verriegelungselement 110e aus der Haltekontur des Halteelements 112e entfernt werden, um so die Verriegelungseinheit 108e zu entriegeln. Die Verriegelungseinheit 108e ist dazu vorgesehen, nach einer Entriegelung wieder in ihre Verriegelstellung gebracht zu werden. Dazu kann das Verriegelungselement 110e wieder in die Haltekontur des Halteelements 112e gedrückt werden.

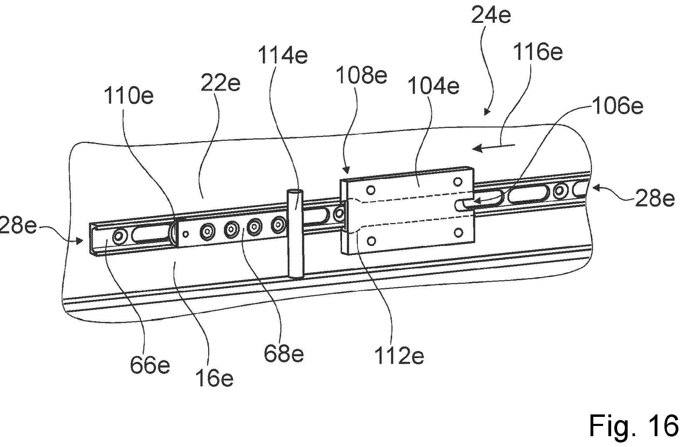

In dem Normalbetriebszustand ist das zweite Lagerelement 68e positionsfest an dem Anbindungselement 104e fixiert. Eine Verstellung der Türeinheit 22e zwischen dem geöffneten und dem geschlossenen Zustand erfolgt über eine Axialbewegung zwischen dem ersten Lagerelement 66e und dem zweiten Lagerelement 68e mittels der Drehlager 80e. In einem von einem Normalbetriebszustand unterschiedlichen Betriebszustand, in dem die Lagerung über das erste und zweite Lagerelement 66e, 68e nicht möglich ist, kann die Türeinheit 22e in ihrem unteren Bereich von dem Anbindungselement 104e, also dem Umhausungselement 16e, entkoppelt werden und so an dem unteren Bereich freischwebend in eine geschlossene Stellung gebracht werden. Durch die mögliche Entkopplung des an der Türeinheit 22e angebrachten ersten Lagerelements 66e von dem an dem Umhausungselement 16e angebrachten Anbindungselement 104e des unteren, zweiten Lagermoduls 28e ist ein Öffnen der Türeinheit 22e auch bei defekter Lagerung mittels des ersten und des zweiten Lagerelements 66e, 68e des zweiten Lagermoduls 28e ermöglicht. Dadurch kann insbesondere eine Sicherheit und ein Komfort erhöht werden, da die Lagervorrichtung 24e weniger störanfällig ausgebildet ist. Beispielhaft ist hier in Figur 16 eine Blockierung des zweiten Lagerelements 68e in dem ersten Lagerelement 66e gezeigt. Die Blockierung ist hier beispielhaft durch einen Stift 114e gezeigt, der das zweite Lagerelement 68e in dem ersten Lagerelement 66e blockiert und insbesondere ein Verschieben der Türeinheit 22a in ihre geöffnete Stellung verhindert hätte. In Figur 16 ist die Verriegelungseinheit 108e in einem schon entkoppelten Zustand gezeigt, in dem das zweite Lagerelement 68e von dem Anbindungselement 104e getrennt ist. Die Türeinheit 22a ist schon in Pfeilrichtung 116e zu dem Umhausungselement 16e und dem damit positionsfest verbundenen Anbindungselement 104e verbunden. Grundsätzlich kann eine solche Blockierung auch durch Schmutz oder durch Beschädigung des ersten Lagerelements 66e, der Drehlager 80e oder des zweiten Lagerelements 68e herbeigeführt sein. Das zweite Lagerelement 68e ist fix mit dem ersten Lagerelement 66e verbunden. Wird nun eine Öffnungskraft in einer Öffnungsrichtung der Türeinheit 22e auf die Türeinheit 22e ausgeübt, beispielsweise durch Drücken eines Passagiers oder Crewmitglieds, wird das Verriegelungselement 110e elastisch verformt und aus der Haltekontur des Halteelements 112e. Dadurch wird die Verriegelungseinheit 108e entriegelt und eine positionsfixe Kopplung zwischen dem zweiten Lagerelement 68e und dem Anbindungselement 104e wird aufgehoben. Dadurch kann das Anbindungselement 104e von dem zweiten Lagerelement 68e getrennt werden und ist zu diesem nun freischwingend angeordnet. Das erste Lagerelement 66e und die damit gekoppelte Türeinheit 22e können nach einer Entkopplung zu dem Anbindungselement 104e und dem Umhausungselement 16e axial bewegt werden. Die mit dem ersten Lagerelement fest verbundene Türeinheit 22e ist an ihrem unteren Ende freischwingend und kann axial verschoben werden und so in die geöffnete Stellung gebracht werden. Die Türeinheit 22e wird dabei insbesondere entlang einer von dem nicht näher dargestellten, oberen, ersten Lagermodul ausgebildeten Lagerelement geführt. Nach einer Entkopplung des zweiten Lagerelements 68e von dem Anbindungselement 104e des zweiten Lagermoduls 28e ist die Türeinheit 22e in dem unteren Bereich nicht mehr mit dem Umhausungselement 16e gekoppelt. Eine Lagerung der Türeinheit 22e erfolgt in einem Zustand nach der Entkopplung ausschließlich über das obere, erste Lagermodul der Lagervorrichtung 24e. Eine Entkopplung der Türeinheit 22e an dem unteren Lagermodul 28e ist möglich, da eine funktionssichere Lagerung in dem vom Normalbetriebszustand unterschiedlichen Betriebszustand auch lediglich über das obere, erste Lagermodul 26e gegeben ist. Die Ausbildung des unteren zweiten Lagermoduls 28e auf die oben beschriebene Weise ist insbesondere deshalb vorteilhaft, da sie platzsparend ausgebildet werden kann, da vorzugsweise auf ein zweites als Lagerschiene ausgebildetes Lagerelement verzichtet werden kann. Deshalb ist die in diesem Ausführungsbeispiel beschriebene Lösung für das zweite Lagermodul 28e insbesondere für am unteren Ende der Türeinheit 22e angebundene Lagermodule 28e vorteilhaft. Grundsätzlich ist es dennoch denkbar, dass ein entsprechendes Lagermodul auch als ein oberes Lagermodul ausgebildet ist. Hierbei wäre es notwendig, ein Auffangelement mit einer entsprechenden Notlaufschiene bereitzustellen, über die die Türeinheit 22e nach einer Entkopplung von der oberen ersten Führungsschiene verschiebbar gelagert und in die geöffnete Stellung gebracht werden könnte.

Grundsätzlich ist es natürlich auch denkbar, dass das zweite Lagermodul 28e so ausgebildet ist, dass das erste, als Lagerschiene ausgebildete Lagerelement 66e fest mit dem Umhausungselement 16e und das Anbindungselement 104e fest mit der Türeinheit verbunden ist. Eine Funktion und Ausbildung der Bauteile des Lagermoduls wäre dabei bis auf die entsprechende Anbindung äquivalent zu der oben Beschriebenen Ausführung.

### Bezugszeichen

- 10: Fluggastsitzbereich
- 12: Flugzeugsitz
- 14: Umhausungseinheit
- 16: Umhausungselement
- 18: Durchgangsbereich
- 20: Gangbereich
- 22: Türeinheit
- 24: Lagervorrichtung
- 26: Lagermodul
- 28: Lagermodul
- 30: Erstes Lagerelement
- 32: Innenseite
- 34: Zweites Lagerelement
- 36: Grundkörper
- 38: Anbindungsbereich
- 40: Anbindungsbereich
- 42: Mittelbereich
- 44: Drittes Lagerelement
- 46: Innenseite
- 48: Drehlager
- 50: Drehlager
- 52: Verriegelungseinheit
- 54: Verriegelungselement
- 56: Befestigungsmittel
- 58: Halteelement
- 60: Haltekontur
- 62: Abstützbereich
- 64: Freigabebereich
- 66: Lagerelement
- 68: Lagerelement
- 70: Grundkörper
- 72: Anbindungsbereich
- 74: Anbindungsbereich
- 76: Mittelbereich
- 78: Lagerelement
- 80: Drehlager
- 82: Drehlager
- 84: Verriegelungseinheit
- 86: Verriegelungselement
- 88: Halteelement
- 90: Haltekontur
- 92: Führungselement
- 94: Führungselemente
- 96: Umhausungselement
- 98: Elektromotor
- 100: Zahnradelement
- 102: Zahnstange
- 104: Anbindungselement
- 106: Anbindungsbereich
- 108: Verriegelungseinheit
- 110: Verriegelungselement
- 112: Halteelement
- 114: Stift
- 116: Pfeilrichtung

## Patentansprüche

1. Flugzeugsitzmodul mit einer Umhausungseinheit (14a; 14b; 14c; 14d), die einen Fluggastsitzbereich (1 0a; 10b) zumindest teilweise begrenzt, und mit einer Türeinheit (22a; 22b; 22c; 22d; 22e), die zumindest dazu vorgesehen ist, zumindest in einem Betriebszustand einen Durchgangsbereich (18a;18b) zu dem Fluggastsitzbereich (10a; 10b) zu verschließen, und mit einer Lagervorrichtung (24a; 24b; 24c; 24d; 24e), die dazu vorgesehen ist, die Türeinheit (22a; 22b; 22c; 22d; 22e) beweglich zu der Umhausungseinheit (14a; 14b; 14c; 14d; 14e) zu lagern und dazu ein Lagermodul (26a, 28a; 26b; 26c; 26d; 26e; 28e) aufweist, das ein erstes Lagerelement (30a, 66a; 30b, 30'b; 30c; 66e) und ein zweites Lagerelement (34a; 34b, 34'b; 34c; 68e) aufweist, die zueinander beweglich gelagert sind, **dadurch gekennzeichnet, dass** das Lagermodul (26a, 28a; 26b, 26c; 26d) ein drittes Lagerelement (44a; 44b, 44'b; 44c) aufweist, das in einem von einem Normalbetriebszustand unterschiedlichen Betriebszustand dazu vorgesehen ist, das zweite Lagerelement (34a; 34b, 34'b; 34c) beweglich zu lagern, wobei das dritte Lagerelement_(44a; 44b, 44'b; 44c) als ein Sekundärlagerelement ausgebildet ist, das in einem von einem vom Normalbetriebszustand unterschiedlichen Betriebszustand für die bewegliche Lagerung der Türeinheit (22a; 22b; 22c; 22d; 22e) vorgesehen ist.

2. Flugzeugsitzmodul nach Anspruch 1, **dadurch gekennzeichnet, dass** das dritte Lagerelement (44a; 44b, 44'b; 44c) dazu vorgesehen ist, die Türeinheit (22a; 22b; 22c; 22d; 22e), in einem im Wesentlichen gleichen Bewegungsbereich zu lagern wie das erste Lagerelement (30a, 66a; 30b, 30'b; 30c; 66e) und das zweite Lagerelement (34a; 34b, 34'b; 34c; 68e).

3. Flugzeugsitzmodul nach Anspruch 1 oder 2, **dadurch gekennzeichnet, dass** das zweite Lagerelement (34a; 34b, 34'b; 34c) dazu vorgesehen ist, in einem Normalbetriebszustand positionssicher an dem dritten Lagerelement (44a; 44b, 44'b; 44c) fixiert zu sein.

4. Flugzeugsitzmodul nach Anspruch 3, **dadurch gekennzeichnet, dass** das erste Lagerelement (30a; 30b, 30'b; 30c; 30d; 66e) als eine mit der Umhausungseinheit (14a; 14b; 14c; 14d; 14e) oder der Türeinheit (22a; 22b; 22c; 22d; 22e) fest angebundene Führungsschiene ausgebildet ist.

5. Flugzeugsitzmodul nach Anspruch 4, **dadurch gekennzeichnet, dass** das dritte Lagerelement (44a; 44b, 44'b; 44c) als eine an der anderen Umhausungseinheit (14a; 14b; 14c) oder Türeinheit (22a; 22b; 22c) fest angebundene Führungsschiene ausgebildet ist.

6. Flugzeugsitzmodul nach einem der vorhergehenden Ansprüche, **dadurch gekennzeichnet, dass** das zweite Lagerelement (34a; 34b, 34'b; 34c) als ein Zwischenlagerelement ausgebildet ist, das zwischen dem ersten Lagerelement (30a; 30b, 30'b; 30c) und dritten Lagerelement (14a; 14b; 14c) angeordnet ist.

7. Flugzeugsitzmodul nach einem der vorhergehenden Ansprüche, **dadurch gekennzeichnet, dass** das zweite Lagerelement (34a; 34b, 34'b; 34c) als ein Lagerschlitten ausgebildet ist, das über ein Gleit- und/oder Drehlager relativ zu dem ersten Lagerelement (30a; 30b, 30'b; 30c) und dem dritten Lagerelement (14a; 14b; 14c) gelagert ist.

8. Flugzeugsitzmodul nach einem der vorhergehenden Ansprüche, **dadurch gekennzeichnet, dass** das Lagermodul (26a; 26b; 26c) eine Verriegelungseinheit (52a; 52b; 52c) aufweist, die dazu vorgesehen ist, das zweite Lagerelement (34a; 34b, 34'b; 34c) in einem Normalbetriebszustand positionsfest mit dem dritten Lagerelement (44a; 44b, 44'b; 44c) zu koppeln.

9. Flugzeugsitzmodul nach Anspruch 8, **dadurch gekennzeichnet, dass** die Verriegelungseinheit (52a; 52b; 52c) dazu vorgesehen ist, das zweite Lagerelement (34a; 34b, 34'b; 34c) kraft- und/oder formschlüssig zu verriegeln.

10. Flugzeugsitzmodul zumindest nach Anspruch 8, **dadurch gekennzeichnet, dass** die Verriegelungseinheit (52a; 52b; 52c) ein fest mit der Umhausungseinheit (14a; 14b; 14c) oder der Türeinheit (22a; 22b; 22c) verbundenes Verriegelungselement (54a) aufweist, das dazu vorgesehen ist, bei einer definierten Kraft die Verriegelungseinheit (52a; 52b; 52c) zu entkoppeln.

11. Flugzeugsitzmodul zumindest nach Anspruch 10, **dadurch gekennzeichnet, dass** das Verriegelungselement (52a) zur Entkopplung dazu vorgesehen ist, zumindest teilweise elastisch verformt zu werden.

12. Flugzeugsitzmodul zumindest nach Anspruch 8, **dadurch gekennzeichnet, dass** die Verriegelungseinheit (52a; 52b; 52c) dazu vorgesehen ist, nach einer Entriegelung wieder in seine Verriegelstellung gebracht zu werden.

13. Flugzeugsitzmodul nach einem der vorhergehenden Ansprüche, **dadurch gekennzeichnet, dass** ein zweites, unteres Lagermodul (28e) ein Anbindungselement (104e) zur Anbindung eines zweiten Lagerelements (68e) aufweist, wobei das zweite Lagerelement (68e) dazu vorgesehen ist, in einem Normalbetriebszustand fest mit dem Anbindungselement (104e) gekoppelt zu sein und in einem von einem Normalbetriebszustand unterschiedlichen Betriebszustand von dem Anbindungselement (104e) entkoppelt zu werden.

14. Flugzeugsitzmodul nach Anspruch 13 **dadurch gekennzeichnet, dass** eine Lagerung der Türeinheit (22e) in einem Zustand nach einer Entkopplung ausschließlich über das obere, erste Lagermodul (26e) der Lagervorrichtung (24e) erfolgt.

15. Flugzeugsitzmodul nach Anspruch 13 oder 14, **dadurch gekennzeichnet, dass** das Anbindungselement (104e) einen Anbindungsbereich (108e) aufweist, in dem das zweite Lagerelement (68e) in dem Normalbetriebszustand positionssicher fixiert ist.

## Claims

1. Aircraft seat module
with an enclosure unit (14a; 14b; 14c; 14d) delimiting a flight passenger seating region (10a; 10b) at least partially, and
with a door unit (22a; 22b; 22c; 22d; 22e) which is at least configured, at least in an operation state, to close a passage region (18a; 18b) to the flight passenger seating region (10a; 10b), and
with a bearing device (24a; 24b, 24c; 24d; 24e) which is configured to support the door unit (22a; 22b; 22c; 22d; 22e) movably relative to the enclosure unit (14a; 14b; 14c; 14d; 14e) and for this purpose has a bearing module (26a, 28a; 26b; 26c; 26d; 26e, 28e) comprising a first bearing element (30a, 66a; 30b, 30'b; 30c; 66e) and a second bearing element (34a; 34b, 34'b; 34c; 68e) which are supported such that they are movable relative to each other,
**characterised in that** the bearing module (26a, 28a; 26b; 26c; 26d) comprises a third bearing element (44a; 44b, 44'b; 44c) which is configured, in an operation state that differs from a normal operation state, to support the second bearing element (34a; 34b, 34'b; 34c) movably, the third bearing element (44a; 44b, 44'b; 44c) being embodied as a secondary bearing element which, in an operation state that differs from the normal operation state, is configured for the movable support of the door unit (22a; 22b; 22c; 22d; 22e).

2. Aircraft seat module according to claim 1,
**characterised in that** the third bearing element (44a; 44b, 44'b; 44c) is configured to support the door unit (22a; 22b; 22c; 22d; 22e) in a movement range that is substantially the same as the movement range of the first bearing element (30a, 66a; 30b, 30'b; 30c; 66e) and of the second bearing element (34a; 34b, 34'b; 34c; 68e).

3. Aircraft seat module according to claim 1 or 2,
**characterised in that** the second bearing element (34a; 34b, 34'b; 34c) is configured, in a normal operation state, to be fixed at the third bearing element (44a; 44b, 44'b; 44c) in a positionally secure manner.

4. Aircraft seat module according to claim 3,
**characterised in that** the first bearing element (30a; 30b, 30'b; 30c; 30d; 66e) is embodied as a guide rail, which is fixedly connected to the enclosure unit (14a; 14b; 14c; 14d; 14e) or to the door unit (22a; 22b; 22c; 22d; 22e).

5. Aircraft seat module according to claim 4,
**characterised in that** the third support element (44a; 44b, 44'b; 44c) is embodied as a guide rail, which is fixedly connected to the other enclosure unit (14a; 14b; 14c) or door unit (22a; 22b; 22c).

6. Aircraft seat module according to one of the preceding claims,
**characterised in that** the second bearing element (34a; 34b, 34'b; 34c) is realized as an intermediary bearing element that is arranged between the first bearing element (30a; 30b, 30'b; 30c) and the third bearing element (44a ; 44b, 44'b ; 44c).

7. Aircraft seat module according to one of the preceding claims,
**characterised in that** the second bearing element (34a; 34b, 34'b; 34c) is realized as a bearing carriage, which is supported relative to the first bearing element (30a; 30b, 30'b; 30c) and to the third bearing element (44a ; 44b, 44'b ; 44c) via a glide and/or swivel bearing.

8. Aircraft seat module according to one of the preceding claims,
**characterised in that** the bearing module (26a; 26b; 26c) comprises a locking unit (52a; 52b; 52c), which is configured, in a normal operation state, to couple the second bearing element (34a; 34b, 34'b; 34c) with the third bearing element (44a; 44b, 44'b; 44c) in a positionally secure manner.

9. Aircraft seat module according to claim 8,
**characterised in that** the locking unit (52a; 52b; 52c) is configured for locking the second bearing element (34a; 34b, 34'b; 34c) in a force-fit and/or form-fit manner.

10. Aircraft seat module at least according to claim 8,
**characterised in that** the locking unit (52a; 52b; 52c) comprises a locking element (54a), which is fixedly connected with the enclosure unit (14a; 14b; 14c) or with the door unit (22a; 22b; 22c) and is configured for uncoupling the locking unit (52a; 52b; 52c) at a defined force.

11. Aircraft seat module at least according to claim 10,
**characterised in that** for an uncoupling the locking element (54a) is configured to be at least partially deformed elastically.

12. Aircraft seat module at least according to claim 8,
**characterised in that** the locking unit (52a; 52b; 52c) is configured to be returned into its locking position after an unlocking.

13. Aircraft seat module according to one of the preceding claims,
**characterised in that** a second, lower bearing module (28e) comprises a connection element (104e) for a connection of a second bearing element (68e), the second bearing element (68e) being configured to be fixedly coupled with the connection element (104e) in a normal operation state, and to be uncoupled from the connection element (104e) in an operation state that differs from a normal operation state.

14. Aircraft seat module according to claim 13,
**characterised in that** in a state after an uncoupling, a support of the door unit (22e) is realized exclusively via the upper, first bearing module (26e) of the bearing device (24e).

15. Aircraft seat module according to claim 13 or 14,
**characterised in that** the connection element (104e) has a connection region (108e) in which the second bearing element (68e) is fixed in a positionally secure manner in the normal operation state.

## Revendications

1. Module de siège d'avion
avec une unité-compartiment (14a ; 14b ; 14c ; 14d) au moins partiellement limitant une zone d'assise de passager aérien (10a ; 10b)
et avec une unité-porte (22a ; 22b ; 22c ; 22d ; 22e) qui, au moins dans un état de fonctionnement, est au moins prévue à fermer une zone de passage (18a ; 18b) à la zone d'assise de passager aérien (10a ; 10b),
et avec un dispositif de support (24a ; 24b ; 24c ; 24d ; 24e) prévu à supporter l'unité-porte (22a ; 22b ; 22c ; 22d ; 22e) d'une telle manière qu'elle est mouvable par rapport à l'unité-compartiment (14a ; 14b ; 14c ; 14d ; 14e), ayant à cette fin un module de support (26a, 28a ; 26b ; 26c ; 26d ; 26e, 28e) qui comprend un premier élément de support (30a, 66a ; 30b, 30'b ; 30c ; 66e) et un deuxième élément de support (34a ; 34b, 34'b ; 34c ; 68e) supportés mouvablement l'un par rapport à l'autre,
**caractérisé en ce que** le module de support (26a, 28a ; 26b ; 26c; 26d) comprend un troisième élément de support (44a ; 44b, 44'b ; 44c) prévu, dans un état de fonctionnement différant d'un état de fonctionnement normal, à supporter le deuxième élément de support (34a ; 34b, 34'b ; 34c) mouvablement, où le troisième élément de support (44a ; 44b, 44'b ; 44c) est réalisé comme élément de suppport secondaire et configuré, dans un état de fonctionnement différant de l'état de fonctionnement normal, pour le support mouvable de l'unité-porte (22a ; 22b ; 22c ; 22d ; 22e).

2. Module de siège d'avion selon la revendication 1,
**caractérisé en ce que** le troisième élément de support (44a ; 44b, 44'b ; 44c) est prévu à supporter l'unité-porte (22a ; 22b ; 22c ; 22d ; 22e) dans une gamme de mouvement sensiblement égale à la gamme de mouvement du premier élément de support (30a, 66a ; 30b, 30'b ; 30c ; 66e) et du deuxième élément de support (34a ; 34b, 34'b ; 34c ; 68e).

3. Module de siège d'avion selon la revendication 1 ou 2,
**caractérisé en ce que** le deuxième élément de support (34a ; 34b, 34'b ; 34c) est prévu, dans un état de fonctionnement normal, à être fixé au troisième élément de support (44a ; 44b, 44'b ; 44c) en position stable.

4. Module de siège d'avion selon la revendication 3,
**caractérisé en ce que** le premier élément de support (30a ; 30b, 30'b ; 30c ; 30d ; 66e) est réalisé comme rail de guidage raccordé fixement à l'unité-compartiment (14a ; 14b ; 14c ; 14d ; 14e) ou à l'unité-porte (22a ; 22b ; 22c ; 22d ; 22e).

5. Module de siège d'avion selon la revendication 4,
**caractérisé en ce que** le troisième élément de support (44a ; 44b, 44'b ; 44c) est réalisé comme rail de guidage raccordé fixement à l'autre unité-compartiment (14a ; 14b ; 14c) ou l'autre unité-porte (22a ; 22b ; 22c).

6. Module de siège d'avion selon l'une des revendications précédentes,
**caractérisé en ce que** le deuxième élément de support (34a ; 34b, 34'b ; 34c) est réalisé comme élément de support intermédiaire disposé entre le premier élément de support (30a ; 30b, 30'b ; 30c) et le troisième élément de support (44a ; 44b, 44'b ; 44c).

7. Module de siège d'avion selon l'une des revendications précédentes,
**caractérisé en ce que** le deuxième élément de support (34a ; 34b, 34'b ; 34c) est réalisé comme chariot de support et est supporté par rapport au premier élément de support (30a ; 30b, 30'b ; 30c) et au troisième élément de support (44a ; 44b, 44'b ; 44c) par un palier lisse et/ou rotatif.

8. Module de siège d'avion selon l'une des revendications précédentes,
**caractérisé en ce que** le module de support (26a ; 26b ; 26c) comprend une unité à verrouillage (52a ; 52b ; 52c) prévue, dans un état de fonctionnement normal, pour coupler le deuxième élément de support (34a ; 34b, 34'b ; 34c) avec le troisième élément de support (44a ; 44b, 44'b ; 44c) en position stable.

9. Module de siège d'avion selon la revendication 8,
**caractérisé en ce que** l'unité à verrouillage (52a ; 52b ; 52c) est prévue à verrouiller le deuxième élément de support (34a ; 34b, 34'b ; 34c) par liaison en force et/ou en forme.

10. Module de siège d'avion au moins selon la revendication 8,
**caractérisé en ce que** l'unité à verrouillage (52a ; 52b ; 52c) comprend un élément verrouillant (54a) qui est fixement lié avec l'unité-compartiment (14a ; 14b ; 14c) ou avec l'unité-porte (22a ; 22b ; 22c) et est prévu à découpler l'unité à verrouillage (52a ; 52b ; 52c) en cas d'une force définie.

11. Module de siège d'avion au moins selon la revendication 10,
**caractérisé en ce que** pour le découplage l'élément verrouillant (52a) est prévu à être au moins partiellement déformé élastiquement.

12. Module de siège d'avion au moins selon la revendication 8,
**caractérisé en ce que** l'unité à verrouillage (52a ; 52b ; 52c) est prévue à être remise dans sa position de verrouillage après un déverrouillage.

13. Module de siège d'avion selon l'une des revendications précédentes,
**caractérisé en ce qu'un** deuxième, inférieur module de support (28e) comprend un élément raccordant (104e) pour un raccordement d'un deuxième élément de support (68e),
le deuxième élément de support (68e) étant prévu à être couplè fixement avec l'élément raccordant (104e) dans un état de fonctionnement normal et à être découplé de l'élément raccordant (104e) dans un état de fonctionnement qui diffère de l'état de fonctionnement normal.

14. Module de siège d'avion selon la revendication 13,
**caractérisé en ce que** dans un état suivant un découplage, un support de l'unité-porte (22e) est réalisé exclusivement par le biais du premier, supérieur module de support (26e) du dispositif de support (24e).

15. Module de siège d'avion au moins selon la revendication 13 ou 14,
**caractérisé en ce que** l'élément raccordant (104e) comporte une zone de raccordement (108e) dans lequel le deuxième élément de support (68e) est fixé en position stable dans l'état de fonctionnement normal.
